# EUROPEAN PATENT APPLICATION

(11) **EP 4 425 607 A1**
(43) Date of publication of application: **04.09.2024**
(21) Application number: 22939228.7
(22) Date of filing: 29.04.2022
(51) Int. Cl.: H01M 4/36, H01M 4/58, H01M 10/0569, H01M 10/0525

(54) **SECONDARY BATTERY, BATTERY MODULE, BATTERY PACK, AND ELECTRICAL DEVICE**

(71) Applicant: Contemporary Amperex Technology Co., Limited, Ningde, Fujian 352100 (CN)
(72) Inventor: ZHANG, Limei, Ningde, Fujian 352100 (CN); LIU, Jiao, Ningde, Fujian 352100 (CN); CHEN, Peipei, Ningde, Fujian 352100 (CN)
(74) Representative: Gong, Jinping
(86) International application number: PCT/CN2022/090351
(87) International publication number: WO 2023/206379

(57) **Abstract**

A secondary battery (5), a battery module (4), a battery pack (1), and an electric apparatus are provided. The secondary battery (5) includes a positive electrode plate and a non-aqueous electrolyte. The positive electrode plate includes a positive electrode active material, the positive electrode active material including a core and a shell enveloping the core, where the core contains Li₁₊ₓMn_{1-y}A_{y}P_{1-z}R_{z}O₄, and the shell includes a first coating layer enveloping the core and a second coating layer enveloping the first coating layer. The first coating layer includes a pyrophosphate MP₂O₇ and a phosphate XPO₄, where M and X each are one or more independently selected from Li, Fe, Ni, Mg, Co, Cu, Zn, Ti, Ag, Zr, Nb, or Al; and the second coating layer contains carbon. The non-aqueous electrolyte includes an organic solvent, where the organic solvent includes a first solvent, and the first solvent includes one or more of compounds represented by formula 1.

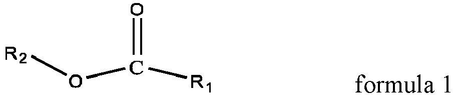

## Description

### TECHNICAL FIELD

This application relates to the field of battery technologies, and in particular, to a secondary battery, a battery module, a battery pack, and an electric apparatus.

### BACKGROUND

In recent years, with the development of lithium-ion secondary battery technologies, lithium-ion secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to the great development of lithium-ion secondary batteries, higher requirements are imposed on their energy density, cycling performance, safety performance, and the like.

Lithium manganese phosphate, as a positive electrode active material for a lithium-ion secondary battery, has the advantages of high capacity, good safety, and low cost. However, the rate performance of lithium manganese phosphate is poor, which restricts its commercial application.

### SUMMARY

This application provides a secondary battery, a battery module, a battery pack, and an electric apparatus to solve the problem of poor rate performance of the lithium-ion secondary battery when lithium manganese phosphate is used as the positive electrode active material of the secondary battery.

A first aspect of this application provides a secondary battery. The secondary battery includes a positive electrode plate and a non-aqueous electrolyte. The positive electrode plate includes a positive electrode active material, the positive electrode active material including a core and a shell enveloping the core. The core contains Li₁₊ₓMn_{1-y}A_{y}P_{1-z}R_{z}O₄, where x = -0.100 to 0.100, y = 0.001 to 0.500, z = 0.001 to 0.100, Ais one or more selected from Zn, Al, Na, K, Mg, Mo, W, Ti, V, Zr, Fe, Ni, Co, Ga, Sn, Sb, Nb, and Ge, and optionally is one or more of Fe, Ti, V, Ni, Co, and Mg, and R is one or more selected from B, Si, N, and S; and the shell includes a first coating layer enveloping the core and a second coating layer enveloping the first coating layer. The first coating layer includes a pyrophosphate MP₂O₇ and a phosphate XPO₄, where M and X each are one or more independently selected from Li, Fe, Ni, Mg, Co, Cu, Zn, Ti, Ag, Zr, Nb, or Al; and the second coating layer contains carbon. The non-aqueous electrolyte includes an organic solvent, where the organic solvent includes a first solvent, and the first solvent includes one or more of compounds represented by formula 1, 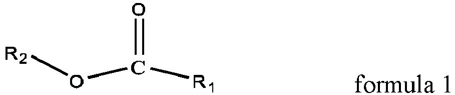 where R₁ and R₂ are each independently one of C1 to C10 alkyl group and C1 to C10 haloalkyl group; optionally R₁ and R₂ are each independently one of methyl, ethyl, propyl, butyl, pentyl, hexyl, fluoromethyl, fluoroethyl, fluoropropyl, fluorobutyl, fluoropentyl, and fluorohexyl, and further optionally R₁ and R₂ are each independently one of methyl, ethyl, propyl, fluoromethyl, fluoroethyl, and fluoropropyl.

Unless otherwise specified, in the foregoing chemical formula, when A is two or more elements, the foregoing limitation on the numerical range of y is not only a limitation on the stoichiometric number of each element as Abut also a limitation on the sum of the stoichiometric numbers of all elements denoted by A. For example, when A is more than two of elements A1, A2, ..., and An, the stoichiometric numbers y1, y2, ..., and yn corresponding to A1, A2, ..., and An each shall fall in the numerical range defined by this application for y, and the sum of y1, y2, ..., and yn shall also fall in the numerical range. Similarly, when R is more than two elements, the limitation on the numerical range of the stoichiometric numbers of R in this application also has the preceding meaning.

With the positive electrode active material having coating layers and the electrolyte having improved compositions, the secondary battery of this application not only effectively enhances the rate performance of the secondary battery but also improves the cycling performance of the secondary battery. Details are as follows:

The positive electrode active material in the secondary electrode of this application is a core-shell structure having two coating layers, where the core contains Li₁₊ₓMn_{1-y}A_{y}P_{1-z}R_{z}O₄. The element A doping at the manganese site of lithium manganese phosphate in the core helps to reduce the lattice change rate of lithium manganese phosphate in the process of lithium deintercalation, to improve the structural stability of the lithium manganese phosphate positive electrode material, to greatly reduce the dissolving-out amount of manganese, and to reduce the oxygen activity on the surface of the particles. The element R doping at the phosphorus site helps to change the difficulty in changing the length of the Mn-O bond, thereby reducing the migration barrier of lithium ions, promoting the migration of lithium ions, and improving the rate performance of the secondary battery.

The first coating layer of the positive electrode active material in the secondary electrode of this application includes pyrophosphate and phosphate. Because the transition metal has high migration barrier in the pyrophosphate (>1 eV), the dissolution of the transition metal can be effectively inhibited. The phosphate has excellent ability to conduct lithium ions, and thus the content of lithium impurities on the surface can be reduced. In addition, as a carbon-containing layer, the second coating layer can effectively improve the electrical conductivity and desolvation ability of LiMnPO₄. In addition, the "barrier" function of the second coating layer can further hinder the migration of manganese ions into the electrolyte and reduce the corrosion of the electrolyte to the active material.

Therefore, performing specific element doping and surface coating on lithium manganese phosphate can reduce effectively inhibit the dissolution of Mn during lithium deintercalation and intercalation, and promote the migration of lithium ions, thereby improving the rate performance of the cell and improving the cycling performance and high-temperature performance of the secondary battery.

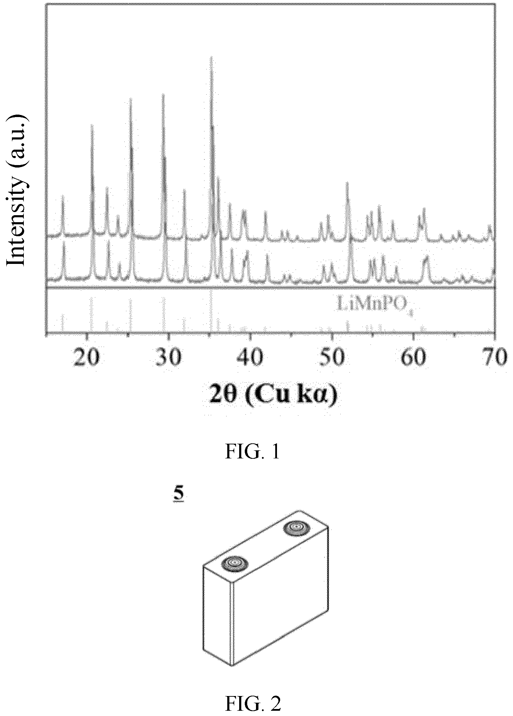

It should be noted that, as shown in FIG. 1, by comparing the XRD spectra of LiMnPO₄ before and after doping in this application, positions of main characteristic peaks of the positive electrode active material in this application are basically consistent with those of LiMnPO₄ before doping, indicating that the doped lithium manganese phosphate positive electrode active material has no impurity phase and that the improvement of the performance of the secondary battery is mainly attributed to the element doping rather than impurity phases.

In addition, the first solvent in the non-aqueous electrolyte has a good ability to dissociate lithium salts, but compared with carbonate, the first organic solvent has little interaction with Li⁺; and as the first solvent gradually dominates a first solvation shell, the desolvation energy of Li⁺ gradually decreases, which is conducive to the rapid deintercalation and intercalation of Li⁺ at the interface, thereby improving the rate performance of the secondary battery. In addition, by virtue of low viscosity, the first solvent enables the lithium ions deintercalated from the positive electrode active material to rapidly migrate and intercalate in the negative electrode side, and driven by the concentration polarization, enables the lithium ions at the interface of the positive electrode material to be rapidly transferred into the electrolyte, which further improves the rate performance of the secondary battery.

In any embodiment of the first aspect, the first solvent includes at least one of the following compounds:

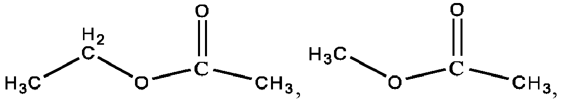

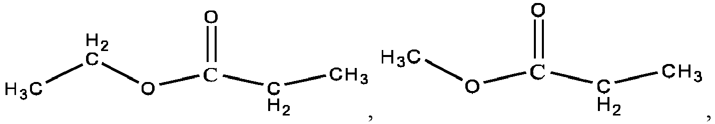

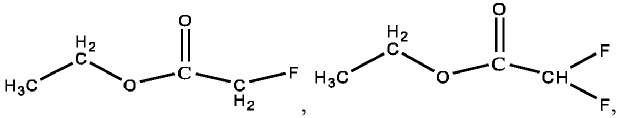

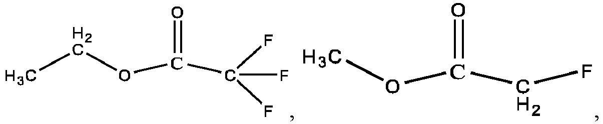

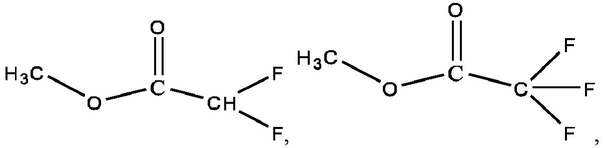

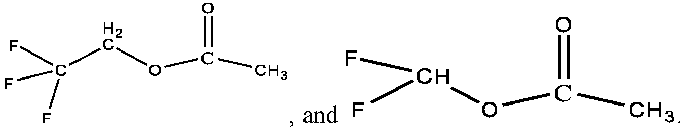

In any embodiment of the first aspect, optionally, the first solvent includes at least one of the following compounds:

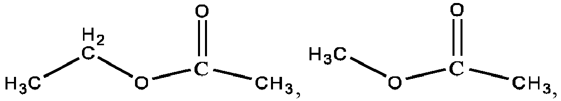

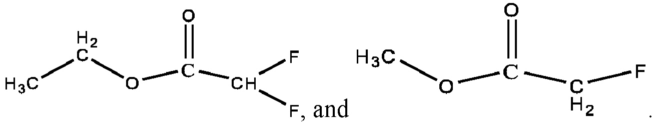

When the foregoing substances are selected as the first solvent, the electrolyte has lower viscosity and better wettability, and thus has better lithium ion transport ability, such that the rate performance of the secondary battery better is better improved, and in addition, the foregoing first solvents have better chemical stability and better oxidation resistance to the positive electrode active material.

In any embodiment of the first aspect, based on a total mass of the organic solvent, a mass percentage of the first solvent is w1, w1 ranging from 20% to 80%, and optionally w1 ranging from 30% to 65%. By controlling the mass percentage as described above, it is possible to use the first solvent to improve the fast charge performance of the battery while providing the secondary battery with good cycling performance and storage performance.

In any embodiment of the first aspect, optionally, the organic solvent further includes a second solvent, where the second solvent includes one or more from a group consisting of a linear carbonate and a cyclic carbonate; and further optionally, based on a total mass of the organic solvent, a mass percentage of the second solvent is w2, w2 ranging from 20% to 80%; and optionally w2 ranging from 35% to 70%. The second solvent can work together with the first solvent to improve the cycling performance of the secondary battery.

In any embodiment of the first aspect, the non-aqueous electrolyte further includes a first additive, where the first additive includes one or more from a group consisting of sultone and cyclic sulfate. The sultone or cyclic sulfate introduced into the non-aqueous electrolyte forms a layer of polymer with strong ion conductivity, for example, an ester-based sulfate, on the surface of the positive electrode active material during charge of the secondary battery. The polymer can further improve the rate performance of the secondary battery, and can also effectively inhibit the catalytic oxidation of the positive electrode active material to the first solvent, thereby improving the cycling performance and storage performance of the secondary battery. In addition, the sultone or cyclic sulfate can form a better film at the negative electrode than the first solvent, reducing the reaction of α-H on the first solvent with the active lithium obtained by reduction at the negative electrode, thereby further improving the cycling performance and storage performance of the secondary battery.

In any embodiment of the first aspect, the sultone includes at least one of compounds represented by formula 2: 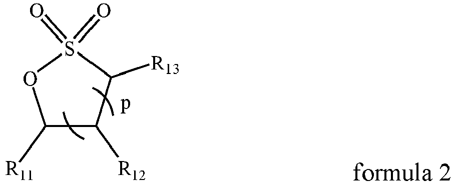
where p represents 1, 2, or 3;
R₁₁ represents one of a hydrogen atom, halogen atom, C1 to C12 alkyl group, C1 to C12 haloalkyl group, C1 to C12 alkoxy group, and C1 to C12 haloalkoxy group; optionally R₁₁ represents one of a hydrogen atom, halogen atom, C1 to C6 alkyl group, C1 to C3 haloalkyl group, C1 to C3 alkoxy group, and C1 to C3 haloalkoxy group; optionally the alkoxy group is linear alkoxy group or cyclic alkoxy group; and optionally the cyclic alkoxy group shares one carbon atom with the parent ring of the sultone, and further optionally the cyclic alkoxy group has 4, 5, or 6 carbon atoms;
each R₁₂ independently represents one of a hydrogen atom, halogen atom, C1 to C12 alkyl group, C1 to C12 haloalkyl group, C1 to C12 alkoxy group, C1 to C12 haloalkoxy group, and 4- to 7-membered sultone group, and optionally each R12 independently represents one of a hydrogen atom, halogen atom, C1 to C3 alkyl group, C1 to C3 haloalkyl group, C1 to C3 alkoxy group, C1 to C3 haloalkoxy group, and 5- to 6-membered sultone group; and optionally the sultone group shares one carbon atom with the parent ring of the sultone, and optionally the sultone group is a 5-membered ring;
R₁₁ and R₁₂ may form a 5- to 10-membered cycloalkyl group with their respective attached carbon atoms;
R₁₃ represents one of a hydrogen atom, halogen atom, carbonyl group, C2 to C6 ester group, C1 to C12 alkyl group, C1 to C12 haloalkyl group, C2 to C12 alkenyl group, C1 to C12 alkoxy group, C1 to C12 haloalkoxy group, and C6 to C20 aryl group or benzyl group, and optionally R₁₃ represents one of a hydrogen atom, halogen atom, carbonyl group, C2 to C3 ester group, C1 to C3 alkyl group, C1 to C3 haloalkyl group, C2 to C6 alkenyl group, C1 to C3 alkoxy group, C1 to C3 haloalkoxy group, and C6 to C10 aryl group or benzyl group. The sultone is commonly used sultone in the art, which is widely available and at a low cost.

In any embodiment of the first aspect, the foregoing cyclic sulfate includes at least one of compounds represented by formula 3, 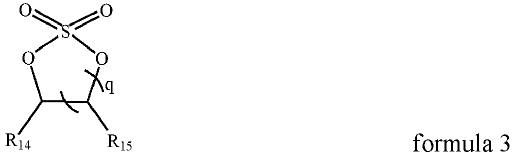
where q represents 1, 2, or 3,
R₁₄ represents one of a hydrogen atom, halogen atom, carbonyl group, C1 to C12 alkyl group, C1 to C12 haloalkyl group, C2 to C12 alkenyl group, C1 to C12 alkoxy group, C1 to C12 haloalkoxy group, C2 to C6 ester group, and 4- to 7-membered cyclic sulfate group, and optionally R₁₄ represents one of a hydrogen atom, halogen atom, carbonyl group, double bond, C1 to C6 alkyl group, C1 to C3 haloalkyl group, C1 to C3 alkoxy group, C1 to C3 haloalkoxy group, C2 to C3 easter group, and 4- to 5-membered cyclic sulfate group; and optionally the cyclic sulfate group shares one carbon atom with the cyclic sulfate;
each R₁₅ independently represents one of a hydrogen atom, halogen atom, C1 to C12 alkyl group, C1 to C12 haloalkyl group, C1 to C12 alkoxy group, C1 to C12 haloalkoxy group, and C6 to C20 aryl group, and optionally each R₁₅ independently represents one of a hydrogen atom, halogen atom, C1 to C6 alkyl group, C1 to C3 haloalkyl group, C1 to C3 alkoxy group, C1 to C3 haloalkoxy group, and C6 to C10 aryl group; or
R₁₄ and R₁₅ each form a 4- to 7-membered cyclic sulfate group together with respective carbon atoms bonded thereto, and further optionally R₁₄ and R₁₅ each form a 5-membered cyclic sulfate group together with respective carbon atoms bonded thereto.

The cyclic sulfate is commonly used cyclic sulfate in the art, which is widely available and at a low cost.

In any embodiment of the first aspect, optionally, the sultone includes at least one of the following compounds:

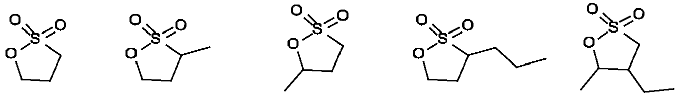

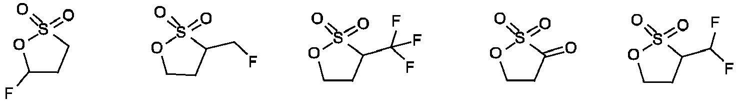

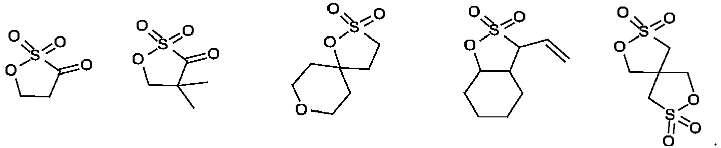

In any embodiment of the first aspect, optionally, the cyclic sulfate includes at least one of the following compounds:

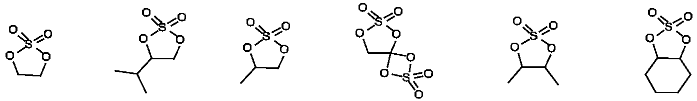

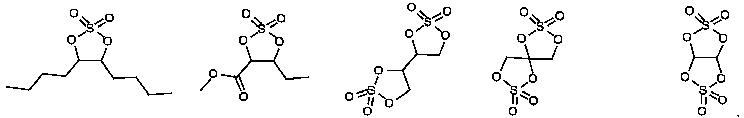

Further optionally, the sultone includes at least one of the following compounds:

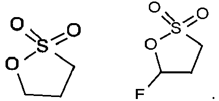

Further optionally, the cyclic sulfate includes at least one of the following compounds:

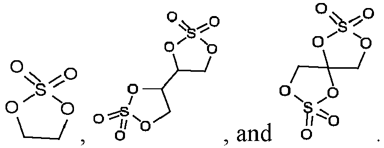

The sultone and the cyclic sulfate are more likely to form a polymer at the positive electrode.

In any embodiment of the first aspect, based on a total mass of the non-aqueous electrolyte, a proportion of the first additive is W3, and 0.01% ≤ W3 ≤ 20%, optionally 0.1% ≤ W3 ≤ 10%, and further optionally 0.5% ≤ W3 ≤ 5%. The increase in impedance of the positive and negative electrode due to the introduction of excessive sultone or cyclic sulfate is avoided such that a significant improvement in the capacity and rate performance of the lithium-ion battery is ensured.

In any embodiment of the first aspect, the non-aqueous electrolyte further includes a second additive, where the second additive includes one or more from a group consisting of a sulfite compound, a disulfonate compound, a nitrile compound, an aromatic compound, a phosphazene compound, an acid anhydride compound, a phosphite compound, a phosphate compound, and a borate compound. The second additive helps to form a more dense and stable interfacial film on the surface of the positive electrode and/or negative electrode active material, thereby further improving at least one of the cycling performance, the storage performance, and the rate performance of the secondary battery.

In any embodiment of the first aspect, based on the total mass of the non-aqueous electrolyte, a proportion of the second additive is W4, and 0.01% ≤ W4 ≤ 20%, optionally 0.05% ≤ W4 ≤ 5%, and further optionally 0.1% ≤ W4 ≤ 3%. Such proportion range enables the second additive to be fully functioned.

In any embodiment of the first aspect, A, C, and D in the positive electrode active material each are independently any one of elements falling in the respective ranges, and B is at least two elements. In this way, the compositions of the positive electrode active material can be more easily and accurately controlled.

In any embodiment of the first aspect, based on a weight of the core, an application amount of the first coating layer is C1wt%, where C1 is greater than 0 and less than or equal to 7, and optionally ranges from 4 to 5.6. With the application amount of the first coating layer falling in the foregoing range, the dissolution of manganese can be further inhibited and lithium ion transport can be further promoted, and the following cases can be effectively avoided: if the application amount of the first coating layer is too small, the inhibition of pyrophosphate to the dissolution of manganese may be insufficient, and the improvement of the lithium ion transport performance is not significant; and if the application amount of the first coating layer is too large, the coating layer may be too thick, increasing the impedance of the battery, and affecting the kinetic performance of the battery.

In any embodiment of the first aspect, based on a weight of the core, an application amount of the second coating layer is C2wt%, where C2 is greater than 0 and less than or equal to 6, and optionally ranges from 3 to 5. The carbon-containing layer as the second coating layer can function as a "barrier" to prevent direct contact between the positive electrode active material and the electrolyte, so as to reduce the corrosion of the electrolyte to the active material and to improve the safety performance of the battery at high temperatures. In addition, the carbon-containing layer has high electrical conductivity and therefore, can reduce the internal resistance of the battery, thereby improving the kinetic performance of the battery. However, the carbon material has a low gram capacity, and therefore, under the condition that the second coating layer is used in an excessive amount, the gram capacity of the entire positive electrode active material may be reduced. With the application amount of the second coating layer falling in the foregoing range, the kinetic performance and safety performance of the battery can be further improved while the gram capacity of the positive electrode active material is maintained.

In any embodiment of the first aspect, a weight ratio of the pyrophosphate to the phosphate in the first coating layer ranges from 1:3 to 3:1, and optionally from 1:3 to 1:1. A proper ratio of the pyrophosphate to the phosphate is conducive to giving full play to the synergistic effect of the two, and the following cases can be effectively avoided: if there is too much pyrophosphate and too little phosphate, the impedance of the battery may increase; if there is too much phosphate and too little pyrophosphate, the effect of inhibiting the dissolution of manganese is not significant.

In any embodiment of the first aspect, the phosphate in the first coating layer has an interplanar spacing of 0.345 nm to 0.358 nm and an included angle of 24.25° to 26.45° in the (111) crystal orientation, and the pyrophosphate in the first coating layer has an interplanar spacing of 0.293 nm to 0.326 nm and an included angle of 26.41° to 32.57° in the (111) crystal orientation. With the interplanar spacings and the included angles in the (111) crystal orientation of the phosphate and the pyrophosphate in the first coating layer in the foregoing ranges, the impurity phase in the coating can be effectively avoided, thereby further increasing the gram capacity, the cycling performance, and rate performance of the material.

In any embodiment of the first aspect, a ratio of y to 1-y in the core ranges from 1:10 to 10:1, and optionally from 1:4 to 1:1. Herein, y denotes the sum of the stoichiometric numbers of elements doping at the Mn site. The energy density and cycling performance of the positive electrode active material can be further improved when the preceding conditions are met.

In any embodiment of the first aspect, a ratio of z to 1-z in the core ranges from 1:9 to 1 :999, and optionally from 1:499 to 1 :249. Herein, z denotes the sum of the stoichiometric numbers of elements doping at the P site. The energy density and cycling performance of the positive electrode active material can be further improved when the preceding conditions are met.

In any embodiment of the first aspect, a crystallinity of the pyrophosphate and a crystallinity of the phosphate each independently range from 10% to 100%, and optionally from 50% to 100%. In the first coating layer of the positive electrode active material of the secondary battery of this application, the pyrophosphate and phosphate having a specific crystallinity is conducive to maintaining the structural stability of the first coating layer and reducing lattice defects. This is beneficial to give full play to the effect of the pyrophosphate on hindering the dissolution of manganese and also beneficial for the phosphate to reduce the amount of lithium impurities contained on the surface and decreasing the surface oxygen valence, thereby reducing interface side reactions between the positive electrode material and the electrolyte, reducing the consumption of electrolyte, and improving the cycling performance and safety performance of the battery.

It should be noted that in this application, the crystallinity of the pyrophosphate and the crystallinity of the phosphate can be adjusted, for example, by adjusting the process conditions such as sintering temperature and sintering time of the sintering process. The crystallinity of the pyrophosphate and the crystallinity of the phosphate may be measured by methods known in the art, for example, by methods such as X-ray diffraction, densimetry, infrared spectroscopy, differential scanning calorimetry, and nuclear magnetic resonance absorption.

In any embodiment of the first aspect, A is at least two selected from of Fe, Ti, V, Ni, Co, and Mg. Two or more of the foregoing elements simultaneously doping at the manganese site in the positive electrode active material is beneficial to enhance the doping effect, thereby further reducing the lattice change rate, suppressing the dissolution of manganese, and decreasing the consumption of electrolyte and active lithium, and also beneficial to lower the surface oxygen activity and reduce the interfacial side reactions between the positive electrode active material and the electrolyte, thereby better improving the cycling performance and high-temperature storage performance of the battery.

In any embodiment of the first aspect, a Li/Mn anti-site defect concentration of the positive electrode active material is below 4%, and optionally below 2%. In the positive electrode active material in this application, the Li/Mn anti-site defect refers to site exchange of Li⁺ and Mn²⁺ in LiMnPO₄ lattice. Because the Li⁺ transport channel is a one-dimensional channel, Mn²⁺ is difficult to migrate in the Li⁺ transport channel, and thus the Mn²⁺ anti-site defect hinders the Li transport. With the Li/Mn anti-site defect concentration controlled at a low level, the gram capacity and rate performance of LiMnPO₄ can be better improved. In this application, the anti-site defect concentration can be determined, for example, according to JIS K 0131-1996.

In any embodiment of the first aspect, a lattice change rate of the positive electrode active material is below 6%, and optionally below 4%. The process of deintercalation of lithium in LiMnPO₄ is a two-phase reaction. The interfacial stress of the two phases is determined by the magnitude of the lattice change rate, where a smaller lattice change rate indicates a lower interfacial stress and easier Li⁺ transfer. Therefore, lowering the lattice change rate of the core is beneficial to increase the Li⁺ transport capacity, thereby improving the rate performance of the secondary battery.

In any embodiment of the first aspect, a surface oxygen valence of the positive electrode active material is below -1.88, and optionally from -1.98 to -1.88. This is because a higher valence of oxygen in the compound indicates stronger electron gaining ability, that is, stronger oxidation. In the positive electrode active material, controlling the surface oxygen valence at a lower level can further reduce the reaction activity on the surface of the positive electrode material and more significantly reduce the interfacial side reaction between the positive electrode material and the electrolyte, thereby further improving the cycling performance and high-temperature storage performance of the secondary battery.

In any embodiment of the first aspect, optionally, a compacted density of the positive electrode active material under 3 tons (T) is greater than 2.0 g/cm³, and optionally greater than 2.2 g/cm³. A higher compacted density of the positive electrode active material, that is, a higher weight of the active material per unit volume, is more conducive to increasing the volumetric energy density of the battery. In this application, the compacted density can be determined, for example, according to GB/T 24533-2009.

A second aspect of this application further provides a battery module, where the battery module includes a secondary battery, the secondary battery being any one of the foregoing secondary batteries of this application.

A third aspect of this application further provides a battery pack, where the battery pack includes a battery module, the battery module being the foregoing battery module of this application.

A fourth aspect of this application further provides an electric apparatus, where the electric apparatus includes at least one of a secondary battery, a battery module, or a battery pack, the secondary battery, the battery module, and the battery pack being the secondary battery, the battery module, and the battery pack provided in this application.

Therefore, the battery module and battery pack of this application have high cycling performance and rate performance, and thus provide high kinetic cycle stability and rate performance for the electric apparatus having the secondary battery, battery module, or battery pack of this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 shows an XRD spectrum of a positive electrode active material according to an embodiment of this application.
FIG. 2 is a schematic diagram of a secondary battery according to an embodiment of this application.
FIG. 3 is an exploded view of the secondary battery according to the embodiment of this application in FIG. 2.
FIG. 4 is a schematic diagram of a battery module according to an embodiment of this application.
FIG. 5 is a schematic diagram of a battery pack according to an embodiment of this application.
FIG. 6 is an exploded view of the battery pack according to the embodiment of this application in FIG. 5.
FIG. 7 is a schematic diagram of an electric apparatus using a secondary battery as a power source according to an embodiment of this application. The accompanying drawings are not drawn to scale.

Reference signs are described as follows:
1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

The following specifically discloses in detail embodiments of the secondary battery, battery module, battery pack, and electric apparatus of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, optionally in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In this specification, the term "coating layer" is a material layer enveloping the core, the material layer can completely or partially envelope the core, and the use of "coating layer" is only for ease of description but not intended to limit this application. Similarly, the term "thickness of the coating layer" refers to a thickness of the substance layer applied on the core in a radial direction of the core.

In this specification, the term "source" refers to a compound that is a source of an element. For example, types of "source" include but are not limited to carbonates, sulfates, nitrates, elementary substances, halides, oxides, and hydroxides.

### [Secondary battery]

Secondary batteries, also referred to as rechargeable batteries or storage batteries, are batteries whose active material can be activated for continuous use through charging after the batteries are discharged.

Generally, a secondary battery includes a positive electrode plate, a negative electrode plate, a separator, and an electrolyte. During charging and discharging of the battery, active ions (for example, lithium ions) intercalate and deintercalate back and forth between the positive electrode plate and the negative electrode plate. The separator is sandwiched between the positive electrode plate and the negative electrode plate to mainly prevent short circuit between the positive and negative electrodes and to allow active ions to pass through. The electrolyte is between the positive electrode plate and the negative electrode plate, playing a role of conducting active ions.

An embodiment of this application provides a secondary battery. The secondary battery includes a positive electrode plate and a non-aqueous electrolyte. The positive electrode plate includes a positive electrode active material, the positive electrode active material including a core and a shell enveloping the core. The core contains Li₁₊ₓMn_{1-y}A_{y}P_{1-z}R_{z}O₄, where x = -0.100 to 0.100, y = 0.001 to 0.500, z = 0.001 to 0.100, Ais one or more selected from Zn, Al, Na, K, Mg, Mo, W, Ti, V, Zr, Fe, Ni, Co, Ga, Sn, Sb, Nb, and Ge, and optionally is one or more of Fe, Ti, V, Ni, Co, and Mg, and R is one or more selected from B, Si, N, and S; and the shell includes a first coating layer enveloping the core and a second coating layer enveloping the first coating layer. The first coating layer includes a pyrophosphate MP₂O₇ and a phosphate XPO₄, where M and X each are one or more independently selected from Li, Fe, Ni, Mg, Co, Cu, Zn, Ti, Ag, Zr, Nb, or Al; and the second coating layer contains carbon. The non-aqueous electrolyte includes an organic solvent, where the organic solvent includes a first solvent, and the first solvent includes one or more of compounds represented by formula 1. 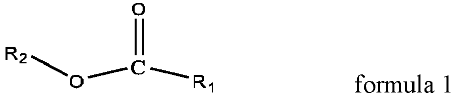 where R₁ and R₂ are each independently one of C1 to C10 alkyl group and C1 to C10 haloalkyl group, and optionally R₁ and R₂ are each independently one of methyl, ethyl, propyl, butyl, pentyl, hexyl, fluoromethyl, fluoroethyl, fluoropropyl, fluorobutyl, fluoropentyl, and fluorohexyl, and further optionally R₁ and R₂ are each independently one of methyl, ethyl, propyl, fluoromethyl, fluoroethyl, and fluoropropyl.

Unless otherwise specified, in the foregoing chemical formula, when A is two or more elements, the foregoing limitation on the numerical range of y is not only a limitation on the stoichiometric number of each element as Abut also a limitation on the sum of the stoichiometric numbers of all elements denoted by A. For example, when A is more than two of elements A1, A2, ..., and An, the stoichiometric numbers y1, y2, ..., and yn corresponding to A1, A2, ..., and An each shall fall in the numerical range defined by this application for y, and the sum of y1, y2, ..., and yn shall also fall in the numerical range. Similarly, when R is more than two elements, the limitation on the numerical range of the stoichiometric numbers of R in this application also has the preceding meaning.

With the positive electrode active material having coating layers and the electrolyte having improved compositions, the secondary battery of this application not only effectively enhances the rate performance of the secondary battery but also improves the cycling performance of the secondary battery. Details are as follows:

The positive electrode active material in the secondary electrode of this application is a core-shell structure having two coating layers, where the core contains Li₁₊ₓMn_{1-y}A_{y}P_{1-z}R_{z}O₄. The element A doping at the manganese site of lithium manganese phosphate in the core helps to reduce the lattice change rate of lithium manganese phosphate in the process of lithium deintercalation, to improve the structural stability of the lithium manganese phosphate positive electrode material, to greatly reduce the dissolving-out amount of manganese, and to reduce the oxygen activity on the surface of the particles. The element R doping at the phosphorus site helps to lower the difficulty in changing the length of the Mn-O bond, thereby reducing the migration barrier of lithium ions, promoting the migration of lithium ions, and improving the rate performance of the secondary battery.

The first coating layer of the positive electrode active material in the secondary electrode of this application includes pyrophosphate and phosphate. Because the transition metal has high migration barrier in the pyrophosphate (>1 eV), the dissolution of the transition metal can be effectively inhibited. The phosphate has excellent ability to conduct lithium ions, and thus the content of lithium impurities on the surface can be reduced. In addition, as a carbon-containing layer, the second coating layer can effectively improve the electrical conductivity and desolvation ability of LiMnPO₄. In addition, the "barrier" function of the second coating layer can further hinder the migration of manganese ions into the electrolyte and reduce the corrosion of the electrolyte to the active material.

Therefore, performing specific element doping and surface coating on lithium manganese phosphate can reduce effectively inhibit the dissolution of Mn during lithium deintercalation and intercalation, and promote the migration of lithium ions, thereby improving the rate performance of the cell and improving the cycling performance and high-temperature performance of the secondary battery.

It should be noted that, as shown in FIG. 1, by comparing the XRD spectra of LiMnPO₄ before and after doping in this application, positions of main characteristic peaks of the positive electrode active material in this application are basically consistent with those of LiMnPO₄ before doping, indicating that the doped lithium manganese phosphate positive electrode active material has no impurity phase and that the improvement of the performance of the secondary battery is mainly attributed to the element doping rather than impurity phases.

In addition, the first solvent in the non-aqueous electrolyte has a good ability to dissociate lithium salts, but compared with carbonate, the first organic solvent has little interaction with Li⁺; and as the first solvent gradually dominates a first solvation shell, the desolvation energy of Li⁺ gradually decreases, which is conducive to the rapid deintercalation and intercalation of Li⁺ at the interface, thereby improving the rate performance of the secondary battery. In addition, by virtue of low viscosity, the first solvent enables the lithium ions deintercalated from the positive electrode active material to rapidly migrate and intercalate in the negative electrode side, and driven by the concentration polarization, enables the lithium ions at the interface of the positive electrode material to be rapidly transferred into the electrolyte, which further improves the rate performance of the secondary battery.

### [Non-aqueous electrolyte]

The first solvent for use in this application may be any carboxylate covered by the foregoing formula 1, and in some embodiments, the foregoing first solvent includes at least one of the following compounds:

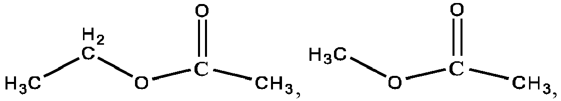

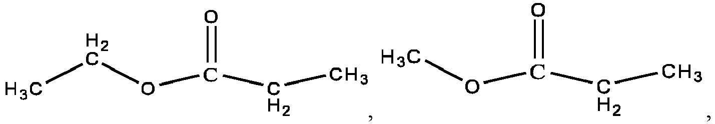

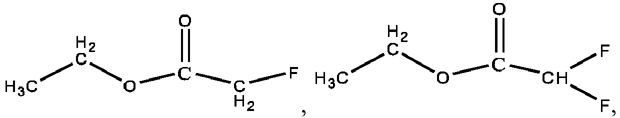

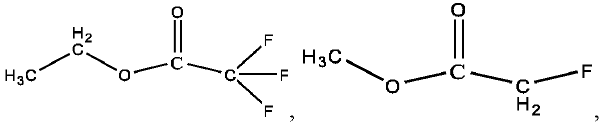

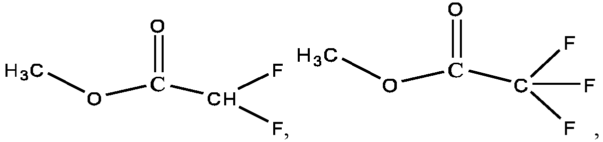

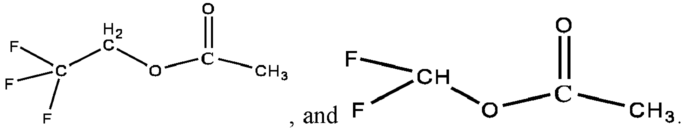

In some embodiments, optionally, the first solvent includes at least one of the following compounds:

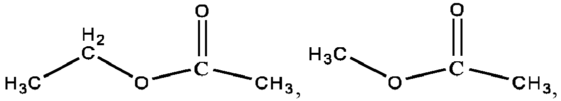

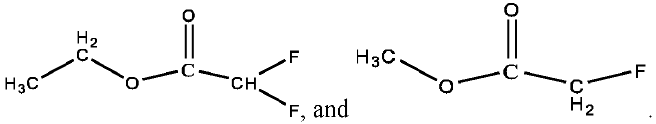

When the foregoing substances are selected as the first solvent, the electrolyte has lower viscosity and better wettability, and thus has better lithium ion transport ability, such that the rate performance of the secondary battery better is better improved, and in addition, the foregoing first solvents have better chemical stability and better oxidation resistance to the positive electrode active material.

Although the first solvent has the advantage of low viscosity and high conductivity, it is prone to chemical reaction with the positive and negative electrodes of the secondary battery, which in turn affects the cycling performance of the secondary battery. In some embodiments, based on a total mass of the organic solvent, a mass percentage of the first solvent is w1, w1 ranging from 20% to 80% (for example, 20%, 25%, 30%, 35%, 40%, 45%, 50%, 55%, 60%, 65%, 70%, 75%, or 80%), and optionally w1 ranging from 30% to 65%. By controlling the mass percentage as described above, it is possible to use the first solvent to improve the fast charge performance of the battery while providing the secondary battery with good cycling performance and storage performance.

Under the condition that this application uses the first solvent as the solvent of the non-aqueous electrolyte, to ensure that the secondary battery has high cycling performance and storage performance as much as possible, in some embodiments, optionally, the organic solvent further includes a second solvent, where the second solvent includes one or more from a group consisting of a linear carbonate and a cyclic carbonate; and further optionally, based on a total mass of the organic solvent, a mass percentage of the second solvent is w2, w2 ranging from 20% to 80% (for example, 20%, 25%, 30%, 35%, 40%, 45%, 50%, 55%, 60%, 65%, 70%, 75%, or 80%), and optionally w2 ranging from 35% to 70%. The second solvent can work together with the first solvent to improve the cycling performance of the secondary battery.

The linear carbonate and cyclic carbonate of the second solvent are not particularly limited, and can be selected depending on actual needs; and optionally, the second solvent may include one or more of dimethyl carbonate, diethyl carbonate, dipropyl carbonate, ethyl methyl carbonate, methyl propyl carbonate, ethylene propyl carbonate, ethylene carbonate, propylene carbonate, butylene carbonate, gamma-butyrolactone, formic acid methyl ester, ethyl formate, methyl acetate, ethyl acetate, propyl acetate, methyl propionate, ethyl propionate, and methyl propionate.

In some embodiments of the first aspect, the solvent of the non-aqueous electrolyte may also include common solvents such as tetrahydrofuran, 1,4-butyrolactone, sulfolane, dimethylsulfone, methyl ethylsulfone, and diethylsulfone, which is not repeated in this application.

Typically, the non-aqueous electrolyte further optionally includes an additive. For example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

Furthermore, in some embodiments, the foregoing non-aqueous electrolyte further comprises a first additive, the first additive comprising one or more from a group consisting of sultone and cyclic sulfate. The sultone or cyclic sulfate introduced into the non-aqueous electrolyte forms a layer of polymer with strong ion conductivity, for example, an ester-based sulfate, on the surface of the positive electrode active material during charge of the secondary battery. The polymer can further improve the rate performance of the secondary battery, and can also effectively inhibit the catalytic oxidation of the positive electrode active material to the first solvent, thereby improving the cycling performance and storage performance of the secondary battery. In addition, the sultone or cyclic sulfate can form a better film at the negative electrode than the first solvent, reducing the reaction of α-H on the first solvent with the active lithium obtained by reduction at the negative electrode, thereby further improving the cycling performance and storage performance of the secondary battery.

The sultone and the cyclic sulfate for use in the foregoing embodiments of this application may be the corresponding substances commonly used in the prior art. In some embodiments, the sultone includes at least one of compounds represented by formula 2: 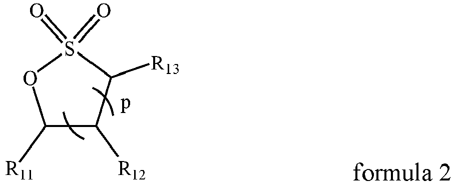
where p represents 1, 2, or 3;
R₁₁ represents one of a hydrogen atom, halogen atom, C1 to C12 alkyl group, C1 to C12 haloalkyl group, C1 to C12 alkoxy group, and C1 to C12 haloalkoxy group, and optionally R₁₁ represents one of a hydrogen atom, halogen atom, C1 to C6 alkyl group, C1 to C3 haloalkyl group, C1 to C3 alkoxy group, and C1 to C3 haloalkoxy group; optionally the alkoxy group is linear alkoxy group or cyclic alkoxy group; and optionally the cyclic alkoxy group shares one carbon atom with the parent ring of the sultone, and further optionally the cyclic alkoxy group has 4, 5, or 6 carbon atoms;
each R₁₂ independently represents one of a hydrogen atom, halogen atom, C1 to C12 alkyl group, C1 to C12 haloalkyl group, C1 to C12 alkoxy group, C1 to C12 haloalkoxy group, and 4- to 7-membered sultone group, and optionally each R12 independently represents one of a hydrogen atom, halogen atom, C1 to C3 alkyl group, C1 to C3 haloalkyl group, C1 to C3 alkoxy group, C1 to C3 haloalkoxy group, and 5- to 6-membered sultone group; and optionally the sultone group shares one carbon atom with the parent ring of the sultone, and optionally the sultone group is a 5-membered ring;
R₁₁ and R₁₂ may form a 5- to 10-membered cycloalkyl group with their respective attached carbon atoms; and
R₁₃ represents one of a hydrogen atom, halogen atom, carbonyl group, C2 to C6 ester group, C1 to C12 alkyl group, C1 to C12 haloalkyl group, C2 to C12 alkenyl group, C1 to C12 alkoxy group, C1 to C12 haloalkoxy group, and C6 to C20 aryl group or benzyl group, and optionally R₁₃ represents one of a hydrogen atom, halogen atom, carbonyl group, C2 to C3 ester group, C1 to C3 alkyl group, C1 to C3 haloalkyl group, C2 to C6 alkenyl group, C1 to C3 alkoxy group, C1 to C3 haloalkoxy group, and C6 to C10 aryl group or benzyl group. The sultone is commonly used sultone in the art, which is widely available and at a low cost.

In some embodiments, the foregoing cyclic sulfate includes at least one of compounds represented by formula 3, 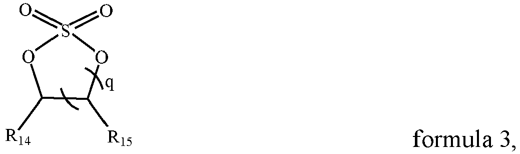
where q represents 1, 2, or 3,
R₁₄ represents one of a hydrogen atom, halogen atom, carbonyl group, C1 to C12 alkyl group, C1 to C12 haloalkyl group, C2 to C12 alkenyl group, C1 to C12 alkoxy group, C1 to C12 haloalkoxy group, C2 to C6 ester group, and 4- to 7-membered cyclic sulfate group, and optionally R₁₄ represents one of a hydrogen atom, halogen atom, carbonyl group, double bond, C1 to C6 alkyl group, C1 to C3 haloalkyl group, C1 to C3 alkoxy group, C1 to C3 haloalkoxy group, C2 to C3 easter group, and 4- to 5-membered cyclic sulfate group; and optionally the cyclic sulfate group shares one carbon atom with the cyclic sulfate;
each R₁₅ independently represents one of a hydrogen atom, halogen atom, C1 to C12 alkyl group, C1 to C12 haloalkyl group, C1 to C12 alkoxy group, C1 to C12 haloalkoxy group, and C6 to C20 aryl group, and optionally each R₁₅ independently represents one of a hydrogen atom, halogen atom, C1 to C6 alkyl group, C1 to C3 haloalkyl group, C1 to C3 alkoxy group, C1 to C3 haloalkoxy group, and C6 to C10 aryl group; or
R₁₄ and R₁₅ each form a 4- to 7-membered cyclic sulfate group together with respective carbon atoms bonded thereto, and further optionally R₁₄ and R₁₅ each form a 5-membered cyclic sulfate group together with respective carbon atoms bonded thereto.

The cyclic sulfate is commonly used cyclic sulfate in the art, which is widely available and at a low cost.

In some embodiments, optionally, the sultone includes at least one of the following compounds:

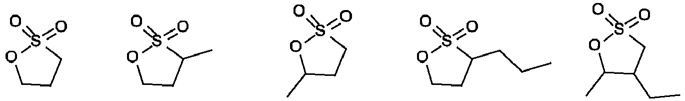

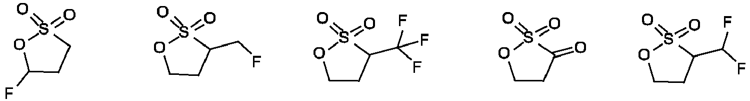

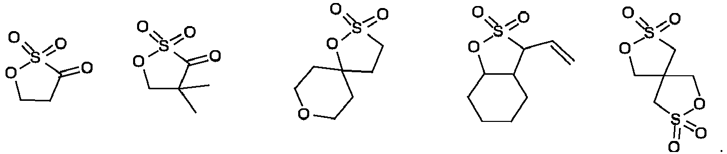

In some embodiments, optionally, the cyclic sulfate includes at least one of the following compounds:

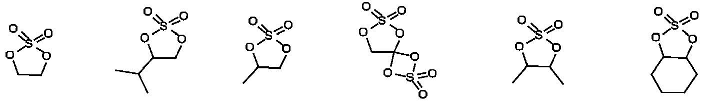

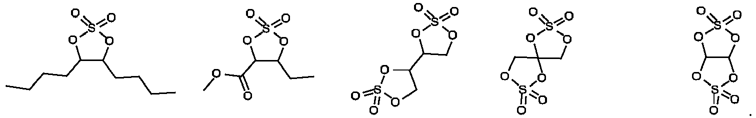

Further optionally, the sultone includes at least one of the following compounds:

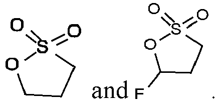

Further optionally, the cyclic sulfate includes at least one of the following compounds:

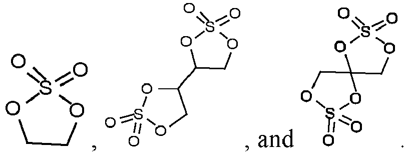

The sultone and the cyclic sulfate are more likely to form a polymer at the positive electrode.

Compared with the first solvent, although the sultone and the cyclic sulfate may improve the cycling performance and storage performance of the secondary battery, if they are used too much, it may cause the impedance of the positive and negative electrodes of the secondary battery to increase, affecting the rate performance of the secondary battery. Persons skilled in the art can select the amounts of the sultone and the cyclic sulfate used in the non-aqueous electrolyte of this application with reference to the conventional amounts of sultone and cyclic sulfate. In some embodiments, a proportion of the foregoing first additive in a total mass of the non-aqueous electrolyte is W3, and 0.01% ≤ W3 ≤ 20% (for example, 0.01%, 0.05%, 0.1%, 0.2%, 0.5%, 1%, 2%, 3%, 4%, 5%, 10%, 15%, or 20%), optionally 0.1% ≤ W3 ≤ 10%, and further optionally 0.5% ≤ W3 ≤ 5%. On the basis of effectively inhibiting the degradation of the cycling performance caused by the first solvent, the increase in impedance of the positive and negative electrode due to the introduction of excessive sultone or cyclic sulfate is avoided such that a significant improvement in the capacity and rate performance of the lithium-ion battery is ensured.

In some embodiments, the non-aqueous electrolyte for use in this application further comprises a second additive, the second additive comprising one or more from a group consisting of a sulfite compound, a disulfonate compound, a nitrile compound, an aromatic compound, a phosphazene compound, an anhydride compound, a phosphite compound, a phosphate compound, and a borate compound. The second additive helps to form a more dense and stable interfacial film on the surface of the positive electrode and/or negative electrode active material, thereby further improving at least one of the cycling performance, the storage performance, and the rate performance of the secondary battery.

In some embodiments, a proportion of the second additive in a total mass of the non-aqueous electrolyte is W4 and 0.01% ≤ W4 ≤ 20%, optionally 0.05% ≤ W4 ≤ 5%, and further optionally 0.1% ≤ W4 ≤ 3%. Such proportion range enables the second additive to be fully functioned.

Some of these second additives are illustrated below.

### Sulfite compound

The sulfite compound is preferably a cyclic sulfite compound, and specifically may be one or more selected from compounds represented by formula 4.

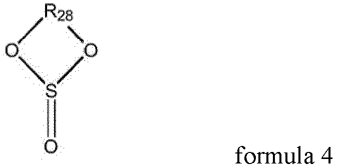

In formula 4, R₂₈ is selected from substituted or unsubstituted C1 to C6 alkylene group or substituted or unsubstituted C2 to C6 alkenylene group, where the substituent group is one or more selected from halogen atom, C1 to C3 alkyl group, and C2 to C4 alkenyl group.

In formula 4, optionally, R₂₈ is selected from substituted or unsubstituted C1 to C4 alkenyl group or substituted or unsubstituted C2 to C4 alkylidene group, where the substituent group is one or more selected from halogen atom, C1 to C3 alkyl group, and C2 to C4 alkenyl group.

Optionally, the sulfite compound may be one or more selected from ethylene sulfite (ES for short), propylene sulfite (PS for short), and butylene sulfite (BS for short).

### Disulfonate compound

The disulfonate compound is a compound containing two sulfonic acid groups (-S(=O)₂O-), preferably selected from a methylene disulfonate compound, and the methylene disulfonate compound may be one or more selected from compounds represented by formula 5. In formula 5, R₂₄, R₂₅, R₂₆, and R₂₇ are each independently selected from hydrogen atom, halogen atom, substituted or unsubstituted C1 to C10 alkyl group, and substituted or unsubstituted C2 to C10 alkenyl group, where the substituent group is one or more selected from halogen atom, C1 to C3 alkyl group, and C2 to C4 alkenyl group.

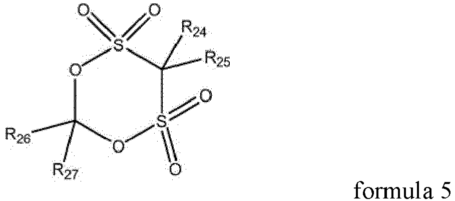

In formula 5, optionally, R₂₄, R₂₅, R₂₆, and R₂₇ are each independently selected from hydrogen atom, halogen atom, substituted or unsubstituted C1 to C4 alkyl group, and substituted or unsubstituted C2 to C6 alkenyl group, where the substituent group is one or more selected from halogen atom, C1 to C3 alkyl group, C2 to C4 alkenyl group, and C2 to C4 alkenyl group.

Optionally, the disulfonate compound may be specifically one or more selected from the following compounds, but this application is not limited thereto:

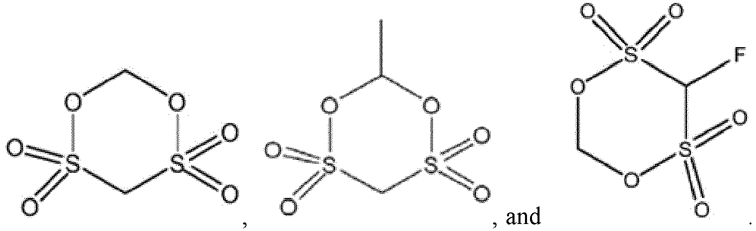

Further optionally, the disulfonate compound may be selected from a methane methylene disulfonate (MMDS for short), with the following specific structure:

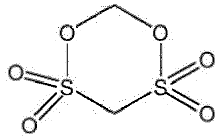

### Nitrile compound

The nitrile compound may be any one or more of compounds illustrated in formula 6 or formula 7:

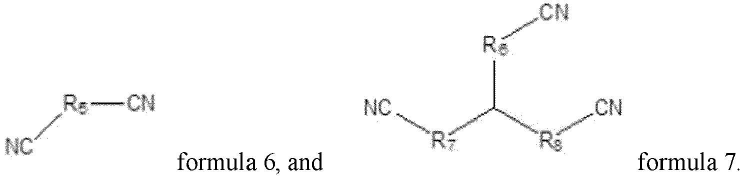

In formula 6 and formula 7, R₅ is selected from substituted or unsubstituted C1 to C12 alkylene group, substituted or unsubstituted C2 to C12 alkenylene group, and substituted or unsubstituted C2 to C12 alkynylene group, and R₆, R₇, and R₈ each are independently selected from substituted or unsubstituted C0 to C12 alkylene group, substituted or unsubstituted C2 to C12 alkenylene group, substituted or unsubstituted C2 to C12 alkynylene group, where the substituent group is one or more selected from halogen atom, nitrile group, a C1 to C6 alkyl group, C2 to C6 alkenyl group, and C1 to C6 alkoxy group. Optionally, R₅ is selected from substituted or unsubstituted C1 to C10 alkylene group, substituted or unsubstituted C2 to C10 alkenylene group, and substituted or unsubstituted C2 to C10 alkynylene group, and R₆, R₇, and Rs each are independently selected from substituted or unsubstituted C0 to C10 alkylene group, substituted or unsubstituted C2 to C10 alkenylene group, substituted or unsubstituted C2 to C10 alkynylene group, where the substituent group is selected from halogen atom.

Optionally further, in formula 6, R₅ is selected from C₁ to C₆ alkylene group, C₂ to C₆ alkenylene group, and C₂ to C₆ alkynylene group, and optionally R₅ is selected from C₂ to C₄ alkylene group, C₂ to C₄ alkenylene group, and C₂ to C₄ alkynylene group; and in formula 7, R₆, R₇, and R₈ are each independently selected from C₀ to C₆ alkylene group, C₂ to C₆ alkenylene group, and C₂ to C₆ alkynylene group, and optionally R₆ is selected from C₀ to C₁ alkylene group, and R₇, R₈ are each independently selected from C₂ to C₄ alkylene group, C₂ to C₄ alkenylene group, and C₂ to C₄ alkynylene group.

In some embodiments, the nitrile compound is one or more selected from ethanonitrile, succinonitrile, glutaronitrile, adiponitrile, pimelonitrile, suberonitrile, azelanitrile, sebaconitrile, undecanedinitrile, dodecanedinitrile, tetramethylsuccinonitrile, methylglutaronitrile, butenedinitrile, 2-pentenedinitrile, hexyl-2-enedinitrile, hexyl-3-enedinitrile, octyl-4-enedinitrile, octyl-4-enedinitrile, 1,2,3-propanetricarbonitrile, 1,3,5-pentanetricarbonitrile, and 1,3,6-hexanetricarbonitrile.

### Aromatic compound

The aromatic compound may be one or more selected from cyclohexylbenzene, fluorocyclohexylbenzene compounds (1-fluoro-2-cyclohexylbenzene, 1-fluoro-3-cyclohexylbenzene, and 1-fluoro-4-cyclohexylbenzene), tert-butylbenzene, tert-amyl benzene, 1-fluoro-4-tert-butylbenzene, biphenyl, terphenyl (ortho-position, meta-position, and para-position), diphenyl ether, fluorobenzene, difluorobenzene (ortho-position, meta-position, and para-position), anisole, 2,4-difluoroanisole, and some hydrides of terphenyl (1,2-dicyclohexylbenzene, 2-phenylbicyclohexyl, 1,2-diphenylcyclohexane, and o-cyclohexylbiphenyl).

Optionally, the aromatic compound may be one or more selected from biphenyl, triphenyl (ortho-position, meta-position, and para-position), fluorobenzene, cyclohexylbenzene, tert-butylbenzene, and tert-amylbenzene, and further optionally the aromatic compound may be one or more selected from biphenyl, o-terphenyl, fluorobenzene, cyclohexylbenzene, and tert-amylbenzene.

### Phosphazene compound

The phosphazene compound is preferably a cyclic phosphazene compound. The cyclic phosphazene compound may be one or more selected from methoxypentafluorocyclotriphosphazene, ethoxypentafluorocyclotriphosphazene, phenoxypentafluorocyclotriphosphazene, and ethoxyheptafluorocyclotriphosphazene.

Optionally, the cyclic phosphazene compound may be one or more selected from methoxypentafluorocyclotriphosphazene, ethoxypentafluorocyclotriphosphazene, and phenoxypentafluorocyclotriphosphazene.

Further optionally, the cyclic phosphazene compound may be selected from methoxypentafluorocyclotriphosphazene or ethoxypentafluorocyclotriphosphazene.

### Anhydride compound

The anhydride compound may be linear anhydride or cyclic anhydride. Specifically, the anhydride compound may be one or more selected from acetic anhydride, propionic anhydride, succinic anhydride, maleic anhydride, 2-allyl succinic anhydride, glutaric anhydride, itaconic anhydride, and 3-sulfo-propionic anhydride.

Optionally, the anhydride compound may be one or more selected from succinic anhydride, maleic anhydride, and 2-allyl succinic anhydride. Further optionally, the anhydride compound may be one or two selected from succinic anhydride and 2-allyl succinic anhydride.

### Phosphite compound

The phosphite compound may be one or more selected from a silane phosphite compound, specifically may be one or more selected from compounds represented by formula 8. In formula 8, R₃₁, R₃₂, R₃₃, R₃₄, R₃₅, R₃₆, R₃₇, R₃₈, and R₃₉ are each independently selected from halogen substituted or unsubstituted C1 to C6 alkyl group.

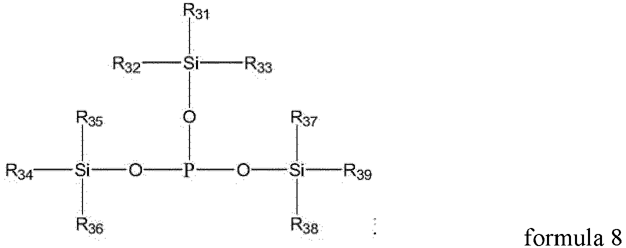

Optionally, the silane phosphite compound may be specifically one or more selected from the following compounds, but this application is not limited thereto:

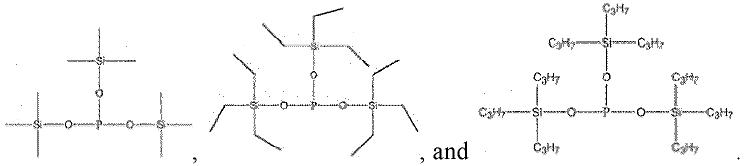

### Phosphate compound

The phosphate compound may be one or more selected from a silane phosphate compound, specifically may be one or more selected from compounds represented by formula 9. In formula 9, R₄₁, R₄₂, R₄₃, R₄₄, R₄₅, R₄₆, R₄₇, R₄₈, and R₄₉ are each independently selected from halogen substituted or unsubstituted C1 to C6 alkyl group.

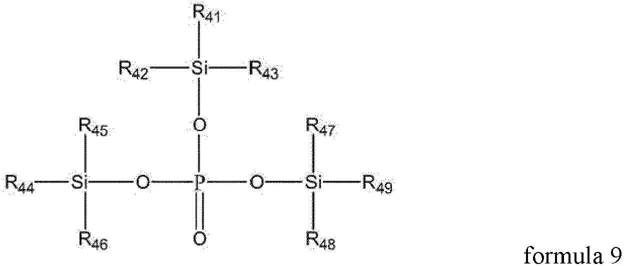

Optionally, the silane phosphate compound may be specifically one or more selected from the following compounds, but this application is not limited thereto:

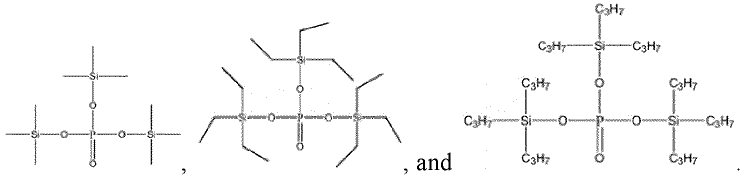

### Borate compound

The borate compound may be one or more selected from a silane borate compound, specifically may be one or more selected from compounds represented by formula 10. In formula 10, R₅₁, R₅₂, R₅₃, R₅₄, R₅₅, R₅₆, R₅₇, R₅₈, and R₅₉ are each independently selected from halogen substituted or unsubstituted C1 to C6 alkyl group.

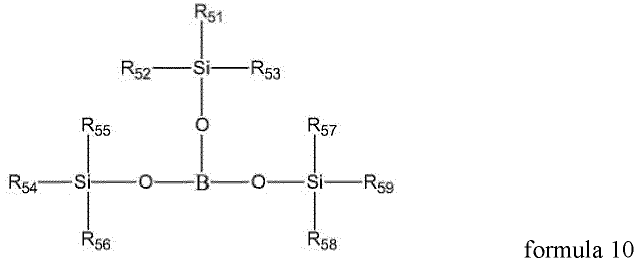

Optionally, the silane borate compound may be specifically one or more selected from the following compounds, but this application is not limited thereto:

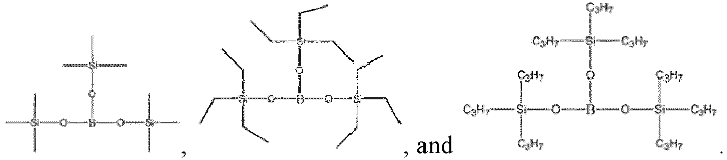

In addition, the non-aqueous electrolyte in the secondary battery of this application further includes a lithium salt, and the type of the lithium salt is not particularly limited and may be selected depending on actual needs. For example, the lithium salt may be one or more selected from LiN(C_{x'}F_{2x'+1}SO₂)(C_{y'}F_{2y'+1}SO₂), LiPF₆, LiBF₄, LiBOB, LiAsF₆, Li(FSO₂)₂N, LiCF₃SO₃, and LiClO₄, where x' and y' are natural numbers, for example, x' and y' are each independently 0, 1, 2, 3, 4, 5, or 6. In some embodiments, a concentration of the lithium salt ranges from 0.5 mol/L to 2.5 mol/L, and optionally from 0.8 mol/L to 2 mol/L.

In addition, the non-aqueous electrolyte in the secondary battery of this application further includes a lithium salt, and the type of the lithium salt is not particularly limited and may be selected depending on actual needs. For example, the lithium salt may be one or more selected from LiN(C_{x'}F_{2x'+1}SO₂)(C_{y'}F_{2y'+1}SO₂), LiPF₆, LiBF₄, LiBOB, LiAsF₆, Li(FSO₂)₂N, LiCF₃SO₃, and LiClO₄, where x' and y' are natural numbers, for example, x' and y' are each independently 0, 1, 2, 3, 4, 5, or 6. In some embodiments, a concentration of the lithium salt ranges from 0.5 mol/L to 2.5 mol/L, and optionally from 0.8 mol/L to 2 mol/L.

The positive electrode plate typically includes a positive electrode current collector and a positive electrode film layer provided on at least one surface of the positive electrode current collector, where the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, based on a weight of the core in the positive electrode active material, an application amount of the first coating layer is C1wt%, where C1 is greater than 0 and less than or equal to 7, and optionally ranges from 4 to 5.6. With the application amount of the first coating layer falling in the foregoing range, the dissolution of manganese can be further inhibited and lithium ion transport can be further promoted, and the following cases can be effectively avoided: if the application amount of the first coating layer is too small, the inhibition of pyrophosphate to the dissolution of manganese may be insufficient, and the improvement of the lithium ion transport performance is not significant; and if the application amount of the first coating layer is too large, the coating layer may be too thick, increasing the impedance of the battery, and affecting the kinetic performance of the battery.

In some embodiments, based on a weight of the core, an application amount of the second coating layer is C2wt%, where C2 is greater than 0 and less than or equal to 6, and optionally ranges from 3 to 5. The carbon-containing layer as the second coating layer can function as a "barrier" to prevent direct contact between the positive electrode active material and the electrolyte, so as to reduce the corrosion of the electrolyte to the active material and to improve the safety performance of the battery at high temperatures. In addition, the carbon-containing layer has high electrical conductivity and therefore, can reduce the internal resistance of the battery, thereby improving the kinetic performance of the battery. However, the carbon material has a low gram capacity, and therefore, under the condition that the second coating layer is used in an excessive amount, the gram capacity of the entire positive electrode active material may be reduced. With the application amount of the second coating layer falling in the foregoing range, the kinetic performance and safety performance of the battery can be further improved while the gram capacity of the positive electrode active material is maintained.

In some embodiments, a weight ratio of the pyrophosphate to the phosphate in the first coating layer ranges from 1:3 to 3:1, and optionally from 1:3 to 1:1. A proper ratio of the pyrophosphate to the phosphate is conducive to giving full play to the synergistic effect of the two, and the following cases can be effectively avoided: if there is too much pyrophosphate and too little phosphate, the impedance of the battery may increase; if there is too much phosphate and too little pyrophosphate, the effect of inhibiting the dissolution of manganese is not significant.

In some embodiments, the phosphate in the first coating layer has an interplanar spacing of 0.345 nm to 0.358 nm and an included angle of 24.25° to 26.45° in the (111) crystal orientation, and the pyrophosphate in the first coating layer has an interplanar spacing of 0.293 nm to 0.326 nm and an included angle of 26.41° to 32.57° in the (111) crystal orientation. With the interplanar spacings and the included angles in the (111) crystal orientation of the phosphate and the pyrophosphate in the first coating layer in the foregoing ranges, the impurity phase in the coating can be effectively avoided, thereby further increasing the gram capacity, the cycling performance, and rate performance of the material.

In some embodiments, a ratio of y to 1-y in the core ranges from 1:10 to 10:1, and optionally from 1:4 to 1:1. Herein, y denotes the sum of the stoichiometric numbers of elements doping at the Mn site. The energy density and cycling performance of the positive electrode active material can be further improved when the preceding conditions are met.

In some embodiments, a ratio of z to 1-z in the core ranges from 1:9 to 1:999, and optionally from 1:499 to 1:249. Herein, z denotes the sum of the stoichiometric numbers of elements doping at the P site. The energy density and cycling performance of the positive electrode active material can be further improved when the preceding conditions are met.

In some embodiments, a crystallinity of the pyrophosphate and a crystallinity of the phosphate each independently range from 10% to 100%, and optionally from 50% to 100%. In the first coating layer of the positive electrode active material of the secondary battery of this application, the pyrophosphate and phosphate having a specific crystallinity is conducive to maintaining the structural stability of the first coating layer and reducing lattice defects. This is beneficial to give full play to the effect of the pyrophosphate on hindering the dissolution of manganese and also beneficial for the phosphate to reduce the amount of lithium impurities contained on the surface and decreasing the surface oxygen valence, thereby reducing interface side reactions between the positive electrode material and the electrolyte, reducing the consumption of electrolyte, and improving the cycling performance and safety performance of the battery.

It should be noted that in this application, the crystallinity of the pyrophosphate and the crystallinity of the phosphate can be adjusted, for example, by adjusting the process conditions such as sintering temperature and sintering time of the sintering process. The crystallinity of the pyrophosphate and the crystallinity of the phosphate may be measured by methods known in the art, for example, by methods such as X-ray diffraction, densimetry, infrared spectroscopy, differential scanning calorimetry, and nuclear magnetic resonance absorption.

In some embodiments, A is at least two selected from of Fe, Ti, V, Ni, Co, and Mg. Two or more of the foregoing elements simultaneously doping at the manganese site in the positive electrode active material is beneficial to enhance the doping effect, thereby further reducing the lattice change rate, suppressing the dissolution of manganese, and decreasing the consumption of electrolyte and active lithium, and also beneficial to lower the surface oxygen activity and reduce the interfacial side reactions between the positive electrode active material and the electrolyte, thereby better improving the cycling performance and high-temperature storage performance of the battery.

In some embodiments, a Li/Mn anti-site defect concentration of the positive electrode active material is below 4%, and optionally below 2%. In the positive electrode active material in this application, the Li/Mn anti-site defect refers to site exchange of Li⁺ and Mn²⁺ in LiMnPO₄ lattice. Because the Li⁺ transport channel is a one-dimensional channel, Mn²⁺ is difficult to migrate in the Li⁺ transport channel, and thus the Mn²⁺ anti-site defect hinders the Li transport. With the Li/Mn anti-site defect concentration controlled at a low level, the gram capacity and rate performance of LiMnPO₄ can be better improved. In this application, the anti-site defect concentration can be determined, for example, according to JIS K 0131-1996.

In some embodiments, a lattice change rate of the positive electrode active material is below 6%, and optionally below 4%. The process of deintercalation of lithium in LiMnPO₄ is a two-phase reaction. The interfacial stress of the two phases is determined by the magnitude of the lattice change rate, where a smaller lattice change rate indicates a lower interfacial stress and easier Li⁺ transfer. Therefore, lowering the lattice change rate of the core is beneficial to increase the Li⁺ transport capacity, thereby improving the rate performance of the secondary battery.

In some embodiments, a surface oxygen valence of the positive electrode active material is below -1.88, and optionally from -1.98 to -1.88. This is because a higher valence of oxygen in the compound indicates stronger electron gaining ability, that is, stronger oxidation. In the positive electrode active material, controlling the surface oxygen valence at a lower level can further reduce the reaction activity on the surface of the positive electrode material and more significantly reduce the interfacial side reaction between the positive electrode material and the electrolyte, thereby further improving the cycling performance and high-temperature storage performance of the secondary battery.

In some embodiments, optionally, a compacted density of the positive electrode active material under 3 tons (T) is greater than 2.0 g/cm³, and optionally greater than 2.2 g/cm³. A higher compacted density of the positive electrode active material, that is, a higher weight of the active material per unit volume, is more conducive to increasing the volumetric energy density of the battery. In this application, the compacted density can be determined, for example, according to GB/T 24533-2009.

The positive electrode active material used in the secondary battery of this application is prepared by the following preparation method. The preparation method includes the following steps:
providing a core material containing Li₁₊ₓMn_{1-y}A_{y}P_{1-z}R_{z}O₄; providing MP₂O₇ powder and an XPO₄ suspension containing a carbon source; and adding the core material and the MP₂O₇ powder into the XPO₄ suspension containing the carbon source for mixing and sintering, to obtain a positive electrode active material.

In some embodiments, the step of providing a core material includes the following steps: step (1): mixing and stirring a manganese source, a source of element A, and an acid in a container to obtain manganese salt particles doped with element A; and step (2): mixing the manganese salt particles doped with element A with a lithium source, a phosphorus source, and the source of element R in a solvent to obtain a slurry, and sintering the slurry under protection of an inert gas atmosphere to obtain a lithium manganese phosphate doped with element A and element R, where the lithium manganese phosphate doped with element A and element R is Li₁₊ₓMn_{1-y}A_{y}P_{1-z}R_{z}O₄, x = -0.100 to 0.100, y = 0.001 to 0.500, z = 0.001 to 0.100, A is one or more selected from Zn, Al, Na, K, Mg, Mo, W, Ti, V, Zr, Fe, Ni, Co, Ga, Sn, Sb, Nb, and Ge, and optionally one or more of Fe, Ti, V, Ni, Co, and Mg, and R is one or more selected from B, Si, N, and S.

Optionally, the step (1) is carried out at a temperature of 20°C to 120°C, optionally 25°C to 80°C; and/or the stirring in step (1) is carried out at 500 rpm to 700 rpm for 60 minutes to 420 minutes, and optionally 120 minutes to 360 minutes.

In some embodiments, the source of element A is one or more selected from elementary substance, sulfate, halide, nitrate, organic acid salt, oxide, or hydroxide of element A; and/or the source of element R is one or more selected from elementary substance, sulfate, halide, nitrate, organic acid salt, oxide, or hydroxide of element R and inorganic acid of element R.

In some embodiments, the MP₂O₇ powder is prepared by the following method: adding a source of elemental M and a phosphorus source to a solvent to obtain a mixture, adjusting the pH of the mixture to be 4-6, stirring for sufficient reaction, and drying and sintering the mixture to obtain the powder, where M is one or more selected from Li, Fe, Ni, Mg, Co, Cu, Zn, Ti, Ag, Zr, Nb, or Al. Optionally, the drying step is carried out at 100°C to 300°C, and optionally 150°C to 200°C for 4h to 8h; and the sintering step is carried out at 500°C to 800°C, and optionally 650°C to 800°C under an inert gas atmosphere for 4h to 10h.

In some embodiments, in the foregoing coating step, the sintering temperature is 500°C to 800°C, and the sintering time is 4h to 10h.

In some embodiments, the positive electrode film layer may further include other positive electrode active materials for secondary batteries that are well known in the art. For example, the positive electrode active material may include at least one of the following materials: olivine-structured lithium-containing phosphate, lithium transition metal oxide, and respective modified compounds thereof. However, this application is not limited to these materials, and may alternatively use other conventional well-known materials that can be used as positive electrode active materials for secondary batteries. One type of these positive electrode active materials may be used alone, or two or more of them may be used in combination. Examples of the lithium transition metal oxide may include, but are not limited to, lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: the constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, and lithium titanate. The silicon-based material may be at least one selected from elemental silicon, silicon-oxygen compound, silicon-carbon composite, silicon-nitrogen composite, or silicon alloy. The tin-based material may be at least one selected from elemental tin, tin-oxygen compound, or tin alloy. However, this application is not limited to these materials, and may alternatively use other conventional materials that can be used as negative electrode active materials for batteries. One of these negative electrode active materials may be used alone, or two or more of them may be used in combination.

In some embodiments, the negative electrode film layer further optionally includes a binder. For example, the binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be at least one selected from superconducting carbon, acetylene black, carbon black, Ketjen black, carbon dots, carbon nanotubes, graphene, and carbon nanofibers.

In some embodiments, the negative electrode film layer may further optionally include other promoters such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Separator]

In some embodiments, the secondary battery further includes a separator. The separator is not limited to any particular type in this application, and may be any well-known porous separator with good chemical stability and mechanical stability.

In some embodiments, a material of the separator may be at least one selected from glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

This application does not impose any special limitations on a shape of the secondary battery, and the secondary battery may be cylindrical, rectangular, or of any other shapes. For example, FIG. 2 shows a secondary battery 5 of a rectangular structure as an example.

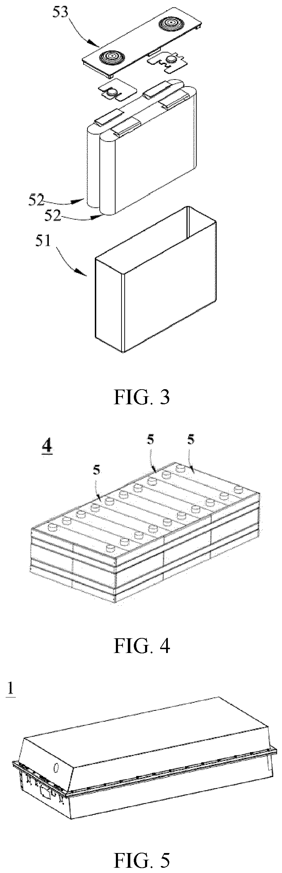

In some embodiments, referring to FIG. 3, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 4 shows a battery module 4 as an example. Refer to FIG. 4. In the battery module 4, a plurality of secondary batteries 5 may be sequentially arranged in a length direction of the battery module 4. Certainly, the batteries may alternatively be arranged in any other manners. Further, the plurality of secondary batteries 5 may be fastened by using fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

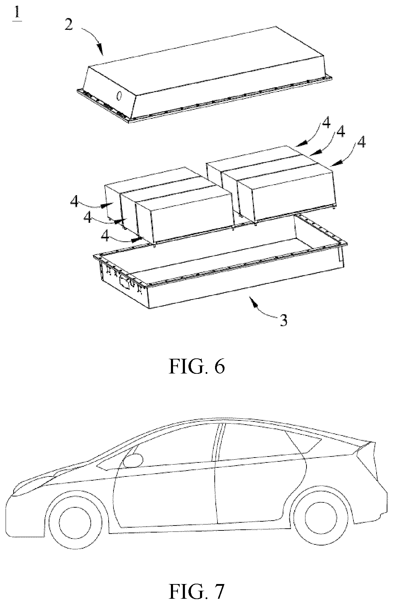

FIG. 5 and FIG. 6 show a battery pack 1 as an example. Refer to FIG. 5 and FIG. 6. The battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 7 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

The first solvent is selected from the following solvents:

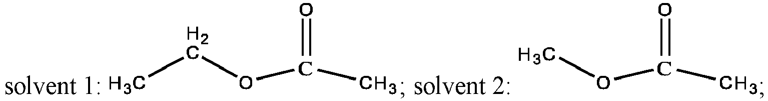

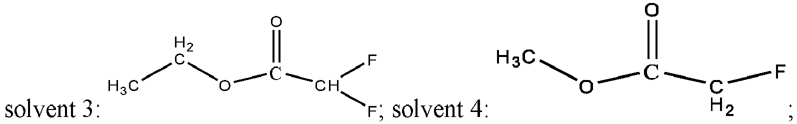

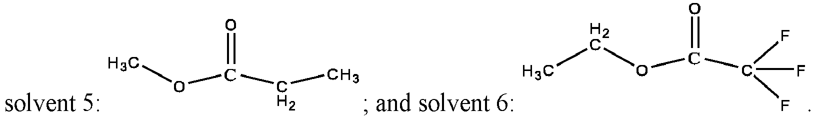

The first additive is selected from the following compounds:

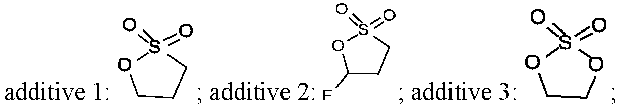

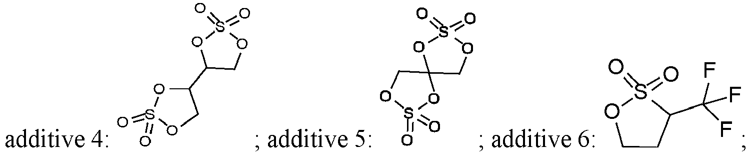

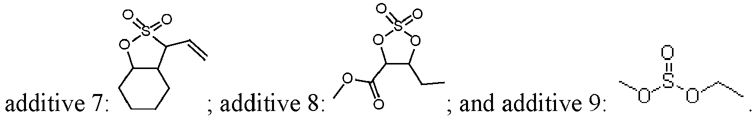

### Example 1

### [Preparation of lithium manganese phosphate positive electrode active material enveloped with two layers]

### (1) Preparation of co-doped lithium manganese phosphate core

**Preparation of Fe, Co, and V co-doped manganese oxalate:** 689.5 g of manganese carbonate (denoted as MnCO₃, the same applies hereinafter), 455.2 g of ferrous carbonate (denoted as FeCO₃, the same applies hereinafter), 4.6 g of cobalt sulfate (denoted as CoSO₄, the same applies hereinafter), and 4.9 g of vanadium dichloride (denoted as VCl₂, the same applies hereinafter) were thoroughly mixed in a mixer for 6 hours; the resulting mixture was transferred to a reactor, followed by adding 5 liters of deionized water and 1260.6 g of oxalic acid dihydrate (denoted as C₂H₂O₄·2H₂O, the same applies hereinafter); the reactor was heated to 80°C, and stirring was carried out at 600 rpm for 6 hours until the reaction was terminated (no bubbles were generated), and a Fe, Co, V, and S co-doped manganese oxalate suspension was obtained; and the suspension was then filtered and the resulting filter cake was dried at 120°C and then milled to obtain Fe, Co, and V co-doped manganese oxalate dihydrate particles with a median particle size Dᵥ50 of 100 nm.

**Preparation of Fe, Co, V, and S co-doped lithium manganese phosphate:** The manganese oxalate dihydrate particles (1793.4 g) obtained in the previous step, 369.0 g of lithium carbonate (denoted as Li₂CO₃, the same applies hereinafter), 1.6 g of dilute sulfuric acid with a concentration of 60% (denoted as 60% H₂SO₄, the same applies hereinafter), and 1148.9 g of ammonium dihydrogen phosphate (denoted as NH₄H₂PO₄, the same applies hereinafter) were added to 20 liters of deionized water, and the resulting mixture was stirred for 10 hours and mixed to uniformity to obtain a slurry; the slurry was transferred to a spray drying apparatus for spray drying and granulation, with the drying temperature set to 250°C and the drying time set to 4 hours, to obtain a powder; and in a protective atmosphere of nitrogen (90vol%) + hydrogen (10vol%), the powder was sintered at 700°C for 4 hours to obtain 1572.1 g of Fe, Co, V, and S co-doped lithium manganese phosphate.

### (2) Preparation of lithium iron pyrophosphate and lithium iron phosphate

**Preparation of lithium iron pyrophosphate powder:** 4.77 g of lithium carbonate, 7.47 g of ferrous carbonate, 14.84 g of ammonium dihydrogen phosphate, and 1.3 g of oxalic acid dihydrate were dissolved in 50 ml of deionized water; the reaction mixture with the pH of 5 was stirred for 2 hours for sufficient reaction; then the solution after reaction was heated to 80°C and maintained at that temperature for 4 hours to obtain a suspension containing Li₂FeP₂O₇; the suspension was filtered, washed with deionized water, and dried at 120°C for 4h to obtain a powder; and the powder was sintered at 650°C under nitrogen atmosphere for 8 hours, cooled naturally to room temperature, and milled to obtain a Li₂FeP₂O₇ powder.

**Preparation of lithium iron phosphate suspension:** 11.1 g of lithium carbonate, 34.8 g of ferrous carbonate, 34.5 g of ammonium dihydrogen phosphate, 1.3 g of oxalic acid dihydrate, and 74.6 g of sucrose (denoted as C₁₂H₂₂O₁₁, the same applies hereinafter) were dissolved in 150 ml of deionized water to obtain a mixture, and the mixture was then stirred for 6 hours for sufficient reaction; and then the solution after reaction was heated to 120°C and maintained at that temperature for 6 hours to obtain a suspension containing LiFePO₄.

### (3) Application

1572.1 g of the Fe, Co, V, and S co-doped lithium manganese phosphate and 15.72 g of the lithium iron pyrophosphate (Li₂FeP₂O₇) powder were added to the lithium iron phosphate (LiFePO₄) suspension prepared in the previous step; and the foregoing substances were stirred and mixed to uniformity and then transferred to a vacuum oven to dry at 150°C for 6 hours; the resulting product was then dispersed by milling; and after dispersion, the resulting product was sintered in a nitrogen atmosphere at 700°C for 6 hours to obtain a target product, namely, lithium manganese phosphate enveloped with two layers.

### [Preparation of positive electrode plate]

The prepared lithium manganese phosphate positive electrode active material enveloped with two layers, a conductive agent acetylene black, and a binder polyvinylidene fluoride (PVDF) were added at a weight ratio of 92:2.5:5.5 to N-methylpyrrolidone (NMP), stirred and mixed to uniformity to obtain a positive electrode slurry; and the positive electrode slurry was applied onto an aluminum foil at 0.280 g/1540.25 mm², followed by drying, cold pressing, and slitting, to obtain a positive electrode plate.

### [Preparation of negative electrode plate]

A negative electrode active substance artificial graphite, hard carbon, a conductive agent acetylene black, a binder styrene-butadiene rubber (SBR), a thickener sodium carboxymethyl cellulose (CMC-Na) were dissolved at a weight ratio of 90:5:2:2:1 in a solvent deionized water, stirred and mixed to uniformity to obtain a negative electrode slurry; and the negative electrode slurry was applied onto a negative electrode current collector copper foil at 0.117 g/1540.25 mm², followed by drying, cold pressing, and slitting, to obtain a negative electrode plate.

### [Preparation of electrolyte]

In an argon atmosphere glove box (H₂O < 0.1 ppm, O₂ < 0.1 ppm), solvent 1 was served as the first solvent, ethylidene carbonate (EC) and ethylmethyl carbonate (EMC) were mixed to uniformity at a volume ratio of 3:7 to serve as the second solvent, the first solvent and the second solvent were jointly served as the organic solvent of the electrolyte, additive 1 was served as the first additive, and LiPF₆ was served as the lithium salt, where a mass ratio of the first solvent to the second solvent was 1:1, and based on a total mass of the electrolyte, a mass percentage of the first additive was 3%, and an amount of LiPF₆ added was 12.5wt%. These substances were mixed and stirred to uniformity to obtain the electrolyte.

### [Separator]

A commercially available PP-PE copolymer microporous film (from Advanced Electronic Technology Co., Ltd. model 20) with a thickness of 20 µm and an average pore size of 80 nm was used.

### [Preparation of full battery]

The positive electrode plate, separator, and negative electrode plate obtained above were stacked in order, such that the separator was placed between the positive and negative electrodes for separation, and winding was performed to obtain a jelly roll. The jelly roll was placed in an outer package, the electrolyte was injected, and the outer package was sealed to obtain a full battery (also referred to as "full battery" hereinafter).

### [Preparation of button battery]

The prepared lithium manganese phosphate positive electrode active material enveloped with two layers, PVDF, and acetylene black were added at a weight ratio of 90:5:5 to NMP, and stirred in a drying room to obtain a slurry; the slurry was applied onto an aluminum foil, followed by drying and cold pressing, to obtain a positive electrode plate; and The application amount was 0.2 g/cm² and the compacted density was 2.0 g/cm³.

A lithium sheet was served as the negative electrode, solvent 1 was served as the first solvent, a mixture of ethylidene carbonate (EC) + diethylidene carbonate (DEC) + dimethyl carbonate (DMC) at a volume ratio of 1:1:1 was served as the second solvent, the first solvent and the second solvent were jointly served as the organic solvent of the electrolyte, additive 1 was served as the first additive, and LiPF₆ was served as a lithium salt, where a mass ratio of the first solvent to the second solvent was 1:1, and based on a total mass of the electrolyte, a mass percentage of the first additive was 3%, and an amount of LiPF₆ added was 1 mol/L. These substances, together with the positive electrode plate prepared above, were assembled in a button box to form a button battery (hereinafter also referred to as "button battery").

### Examples 1-2 to 1-6

The preparation conditions for lithium manganese phosphate cores in Examples 1-2 to 1-6 were the same as those in Example 1-1, except that neither vanadium dichloride nor cobalt sulfate was used and that 463.4 g of ferrous carbonate, 1.6 g of dilute sulfuric acid with a concentration of 60%, 1148.9 g of ammonium dihydrogen phosphate, and 369.0 g of lithium carbonate were used during the preparation of the co-doped lithium manganese phosphate core.

In addition, conditions were the same as those in Example 1-1, except that during the preparation of lithium iron pyrophosphate and lithium iron phosphate and during the application of the first coating layer and the second coating layer, the raw materials used were adjusted accordingly based on ratios of the application amounts shown in Table 1 to the corresponding application amount in Example 1-1 such that the amounts of Li₂FeP₂O₇/LiFePO₄ in Examples 1-2 to 1-6 were respectively 12.6 g/37.7 g, 15.7 g/47.1 g, 18.8 g/56.5 g, 22.0/66.0 g, and 25.1 g/75.4 g, and that the amount of sucrose in Examples 1-2 to 1-6 was 37.3 g.

### Examples 1-7 to 1-10

The conditions in Examples 1-7 to 1-10 were the same as those in Example 1-3 except that the amounts of sucrose were 74.6 g, 149.1 g, 186.4 g, and 223.7 g, respectively such that the corresponding application amounts of the carbon layer as the second coating layer were 31.4 g, 62.9 g, 78.6 g, and 94.3 g, respectively.

### Examples 1-11 to 1-14

The conditions in Examples 1-11 to 1-14 were the same as those in Example 1-7, except that the amounts of various raw materials were adjusted accordingly based on the application amounts shown in Table 1 such that the amounts of Li₂FeP₂O₇/LiFePO₄ were respectively 23.6 g/39.3 g, 31.4 g/31.4 g, 39.3 g/23.6 g, and 47.2 g/15.7 g during the preparation of lithium iron pyrophosphate and the lithium iron phosphate.

### Example 1-15

The conditions in Example 1-15 were the same as those in Example 1-14, except that 492.80 g of ZnCO₃ was used in place of ferrous carbonate during the preparation of the co-doped lithium manganese phosphate core in Example 1-15.

### Examples 1-16 to 1-18

The conditions in Examples 1-17 to 1-19 were the same as those in Example 1-7, except that 466.4 g of NiCO₃, 5.0 g of zinc carbonate, and 7.2 g of titanium sulfate were used in place of ferrous carbonate during the preparation of the co-doped lithium manganese phosphate core in Example 1-16; and that 455.2 g of ferrous carbonate and 8.5 g of vanadium dichloride were used during the preparation of the co-doped lithium manganese phosphate core in Example 1-17; and that 455.2 g of ferrous carbonate, 4.9 g of vanadium dichloride, and 2.5 g of magnesium carbonate were used during the preparation of the co-doped lithium manganese phosphate core in Example 1-18.

### Examples 1-19 and 1-20

The conditions in Examples 1-19 and 1-20 were the same as those in Example 1-18, except that 369.4 g of lithium carbonate and 1.05 g of dilute nitric acid with a concentration of 60% in place of dilute sulfuric acid were used during the preparation of the co-doped lithium manganese phosphate core in Example 1-19, and that 369.7 g of lithium carbonate and 0.78 g of silicate in place of dilute sulfuric acid were used during the preparation of the co-doped lithium manganese phosphate core in Example 1-20.

### Examples 1-21 and 1-22

The conditions in Examples 1-21 and 1-22 were the same as those in Example 1-20, except that 632.0 g of manganese carbonate, 463.30 g of ferrous carbonate, 30.5 g of vanadium dichloride, 21.0 g of magnesium carbonate, and 0.78 g of silicate were used during the preparation of the co-doped lithium manganese phosphate core in Example 1-21; and that 746.9 g of manganese carbonate, 289.6 g of ferrous carbonate, 60.9 g of vanadium dichloride, 42.1 g of magnesium carbonate, and 0.78 g of silicate were used during the preparation of the co-doped lithium manganese phosphate core in Example 1-22.

### Examples 1-23 and 1-24

The conditions in Examples 1-23 and 1-24 were the same as those in Example 1-22, except that 804.6 g of manganese carbonate, 231.7 g of ferrous carbonate, 1156.2 g of ammonium dihydrogen phosphate, 1.2 g of boric acid (mass fraction of 99.5%), and 370.8 g of lithium carbonate were used during the preparation of the co-doped lithium manganese phosphate core in Example 1-23; and that 862.1 g of manganese carbonate, 173.8 g of ferrous carbonate, 1155.1 g of ammonium dihydrogen phosphate, 1.86 g of boric acid (mass fraction of 99.5%), and 371.6 g of lithium carbonate were used during the preparation of the co-doped lithium manganese phosphate core in Example 1-24.

### Example 1-25

The conditions in Example 1-25 were the same as those in Example 1-20, except that 370.1 g of lithium carbonate, 1.56 g of silica, and 1147.7 g of ammonium dihydrogen phosphate were used during the preparation of the co-doped lithium manganese phosphate core in Example 1-25.

### Example 1-26

The conditions in Example 1-26 were the same as those in Example 1-20, except that 368.3 g of lithium carbonate, 4.9 g of dilute sulfuric acid with a mass fraction of 60%, 919.6 g of manganese carbonate, 224.8 g of ferrous carbonate, 3.7 g of vanadium dichloride, 2.5 g of magnesium carbonate, and 1146.8 g of ammonium dihydrogen phosphate were used during the preparation of the co-doped lithium manganese phosphate core in Example 1-26.

### Example 1-27

The conditions in Example 1-27 were the same as those in Examples 1-20 except that 367.9 g of lithium carbonate, 6.5 g of dilute sulfuric acid with a concentration of 60%, and 1145.4 g of ammonium dihydrogen phosphate were used during the preparation of the co-doped lithium manganese phosphate core in Example 1-27.

### Examples 1-28 to 1-33

The conditions in Examples 1-28 and 1-33 were the same as those in Example 1-20, except that, during the preparation of the co-doped lithium manganese phosphate core in Examples 1-28 and 1-33, 1034.5 g of manganese carbonate, 108.9 g of ferrous carbonate, 3.7 g of vanadium dichloride, and 2.5 g of magnesium carbonate were used, the amounts of lithium carbonate used were 367.6 g, 367.2 g, 366.8 g, 366.4 g, 366.0 g, and 332.4 g, respectively, the amounts of ammonium dihydrogen phosphate used were 1144.5 g, 1143.4 g, 1142.2 g, 1141.1 g, 1139.9 g, and 1138.8 g, respectively, and the amount of 60% dilute sulfuric acid used were 8.2 g, 9.8 g, 11.4 g, 13.1 g, 14.7 g, and 16.3 g, respectively.

### Examples 2-1 to 2-4

### Example 2-1

The conditions were the same as those in Example 1-1, except that during the preparation of lithium iron pyrophosphate (Li₂FeP₂O₇), the sintering temperature in the powder sintering step was 550°C and the sintering time was 1h to control the crystallinity of Li₂FeP₂O₇ to be 30%, and that during the preparation of lithium iron phosphate (LiFePO₇), the sintering temperature in the application sintering step was 650°C and the sintering time was 2h to control the crystallinity of LiFePO₇ to be 30%.

### Example 2-2

The conditions were the same as those in Example 1-1, except that during the preparation of lithium iron pyrophosphate (Li₂FeP₂O₇), the sintering temperature in the powder sintering step was 650°C and the sintering time was 2h to control the crystallinity of Li₂FeP₂O₇ to be 50%, and that during the preparation of lithium iron phosphate (LiFePO₇), the sintering temperature in the application sintering step was 650°C and the sintering time was 3h to control the crystallinity of LiFePO₇ to be 50%.

### Example 2-3

The conditions were the same as those in Example 1-1, except that during the preparation of lithium iron pyrophosphate (Li₂FeP₂O₇), the sintering temperature in the powder sintering step was 600°C and the sintering time was 3h to control the crystallinity of Li₂FeP₂O₇ to be 70%, and that during the preparation of lithium iron phosphate (LiFePO₇), the sintering temperature in the application sintering step was 650°C and the sintering time was 4h to control the crystallinity of LiFePO₇ to be 70%.

### Example 2-4

The conditions were the same as those in Example 1-1, except that during the preparation of lithium iron pyrophosphate (Li₂FeP₂O₇), the sintering temperature in the powder sintering step was 650°C and the sintering time was 4h to control the crystallinity of Li₂FeP₂O₇ to be 100%, and that during the preparation of lithium iron phosphate (LiFePO₇), the sintering temperature in the application sintering step was 700°C and the sintering time was 6h to control the crystallinity of LiFePO₇ to be 100%.

### Examples 3-1 to 3-12

The conditions in Examples 3-1 to 3-12 were the same as those in Example 1-1, except that during the preparation of Fe, Co, and V co-doped manganese oxalate particles, the heating temperature/stirring time in the reactor in Example 3-1 were 60°C/120 minutes respectively, the heating temperature/stirring time in the reactor in Example 3-2 were 70°C/120 minutes respectively, the heating temperature/stirring time in the reactor in Example 3-3 were 80°C/120 minutes respectively, the heating temperature/stirring time in the reactor in Example 3-4 were 90°C/120 minutes respectively, the heating temperature/stirring time in the reactor in Example 3-5 were 100°C/120 minutes respectively, the heating temperature/stirring time in the reactor in Example 3-6 were 110°C/120 minutes respectively, the heating temperature/stirring time in the reactor in Example 3-7 were 120°C/120 minutes respectively, the heating temperature/stirring time in the reactor in Example 3-8 were 130°C/120 minutes respectively, the heating temperature/stirring time in the reactor in Example 3-9 were 100°C/60 minutes respectively, the heating temperature/stirring time in the reactor in Example 3-10 were 100°C/90 minutes respectively, the heating temperature/stirring time in the reactor in Example 3-11 were 100°C/150 minutes respectively, and the heating temperature/stirring time in the reactor in Example 3-12 were 100°C/180 minutes respectively.

### Examples 4-1 to 4-7

The conditions in Examples 4-1 to 4-4 were the same as those in Example 1-7, except that during the preparation of lithium iron pyrophosphate (Li₂FeP₂O₇), the drying temperature/drying time in the drying step were respectively 100°C/4h, 150°C/6h, 200°C/6h, and 200°C/6h; and that during the preparation of lithium iron pyrophosphate (Li₂FeP₂O₇), the sintering temperature and sintering time in the sintering step were respectively 700°C/6h, 700°C/6h, 700°C/6h, and 600°C/6h.

The conditions in Examples 4-5 to 4-7 were the same as those in Example 1-12, except that during the application, the drying temperature/drying time in the drying step were respectively 150°C/6h, 150°C/6h, and 150°C/6h; and that during the application, the sintering temperature and sintering time in the sintering step were respectively 600°C/4h, 600°C/6h, and 800°C/8h.

### Comparative Example 1

**Preparation of manganese oxalate:** 1149.3 g of manganese carbonate was added to the reactor, followed by adding 5 liters of deionized water and 1260.6 g of oxalic acid dihydrate (denoted as C₂H₂O₄•2H₂O, the same applies hereinafter). The reactor was heated to 80°C, and stirring was carried out at 600 rpm for 6 hours until the reaction was terminated (no air bubbles were generated), and a manganese oxalate suspension was obtained. The suspension was then filtered and a resulting filter cake was dried at 120°C and then milled to obtain manganese oxalate dihydrate particles with a median particle size Dᵥ50 of 100 nm.

**Preparation of carbon-coated lithium manganese phosphate:** 1789.6 g of manganese oxalate dihydrate particles obtained above, 369.4 g of lithium carbonate (denoted as Li₂CO₃, the same applies hereinafter), 1150.1 g of ammonium dihydrogen phosphate (denoted as NH₄H₂PO₄, the same applies hereinafter), and 31 g sucrose (denoted as C₁₂H₂₂O₁₁, the same applies hereinafter) were added to 20 liters of deionized water, and a resulting mixture was stirred for 10 hours and mixed to uniformity to obtain a slurry; the slurry was transferred to a spray drying apparatus for spray drying and granulation, with the drying temperature set to 250°C and the drying time set to 4 hours, to obtain a powder; and in a protective atmosphere of nitrogen (90vol%) + hydrogen (10vol%), the powder was sintered at 700°C for 4 hours to obtain a lithium manganese phosphate enveloped with carbon.

### Comparative Example 2

The conditions in Comparative Example 2 were the same as those in Comparative Example 1, except that 689.5 g of manganese carbonate was used and that 463.3 g of ferrous carbonate was additionally added.

### Comparative Example 3

The conditions in Comparative Example 3 were the same as those in Comparative Example 1, except that 1148.9 g of ammonium dihydrogen phosphate and 369.0 g of lithium carbonate were used and that 1.6 g of dilute sulfuric acid with a concentration of 60% was additionally added.

### Comparative Example 4

The conditions in Comparative Example 4 were the same as those in Comparative Example 1, except that 689.5 g of manganese carbonate, 1148.9 g of ammonium dihydrogen phosphate, and 369.0 g of lithium carbonate were used and that 463.3 g of ferrous carbonate and 1.6 g of dilute sulfuric acid with a concentration of 60% were additionally added.

### Comparative Example 5

The conditions in Comparative Example 5 were the same as those in Comparative Example 4, except that the following steps were additionally added during preparation of lithium iron pyrophosphate powder: 9.52 g of lithium carbonate, 29.9 g of ferrous carbonate, 29.6 g of ammonium dihydrogen phosphate, and 32.5 g of oxalic acid dihydrate were dissolved in 50 ml of deionized water; the reaction mixture with the pH of 5 was stirred for 2 hours for sufficient reaction; then the solution after reaction was heated to 80°C and maintained at that temperature for 4 hours to obtain a suspension containing Li₂FeP₂O₇; the suspension was filtered, washed with deionized water, and dried at 120°C for 4h to obtain a powder; and the powder was sintered at 500°C in a nitrogen atmosphere for 4 hours, naturally cooled to room temperature, and then milled to control the crystallinity of Li₂FeP₂O₇ to be 5%; and 62.8 g of Li₂FeP₂O₇ was used for preparation of the material enveloped with carbon.

### Comparative Example 6

The conditions in Comparative Example 6 were the same as those in Comparative Example 4, except that the following steps were additionally added during **preparation** of lithium **iron phosphate suspension:** 14.7 g of lithium carbonate, 46.1 g of ferrous carbonate, 45.8 g of ammonium dihydrogen phosphate, and 50.2 g of oxalic acid dihydrate were dissolved in 500 ml of deionized water, and then the mixture was stirred for 6 hours for sufficient reaction; and then the solution after reaction was heated to 120°C and maintained at that temperature for 6 hours to obtain a suspension containing LiFePO₄, that during the preparation of lithium iron phosphate (LiFePO₄), the sintering temperature in the application sintering step was 600°C and the sintering time was 4h to control the crystallinity of LiFePO₄ to be 8%, and that during the preparation of the material enveloped with carbon, the amount of LiFePO₄ used was 62.8 g.

### Comparative Example 7

**Preparation of lithium iron pyrophosphate powder:** 2.38 g of lithium carbonate, 7.5 g of ferrous carbonate, 7.4 g of ammonium dihydrogen phosphate, and 8.1 g of oxalic acid dihydrate were dissolved in 50 ml of deionized water; the reaction mixture with the pH of 5 was stirred for 2 hours for sufficient reaction; then the solution after reaction was heated to 80°C and maintained at that temperature for 4 hours to obtain a suspension containing Li₂FeP₂O₇; the suspension was filtered, washed with deionized water, and dried at 120°C for 4h to obtain a powder; and the powder was sintered at 500°C under nitrogen atmosphere for 4 hours, cooled naturally to room temperature, and milled to control the crystallinity of Li₂FeP₂O₇ to be 5%.

**Preparation of lithium iron phosphate suspension:** 11.1 g of lithium carbonate, 34.7 g of ferrous carbonate, 34.4 g of ammonium dihydrogen phosphate, 37.7 g of oxalic acid dihydrate, and 37.3 g of sucrose (denoted as C₁₂H₂₂O₁₁, the same applies hereinafter) were dissolved in 1500 ml of deionized water, and the mixture was then stirred for 6 hours for sufficient reaction; then the solution after reaction was heated to 120°C and maintained at that temperature for 6 hours to obtain a suspension containing LiFePO₄; and
15.7 g of the lithium iron pyrophosphate powder prepared was added to the lithium iron phosphate (LiFePO₄) and sucrose suspension. The conditions in Comparative Example 7 were the same as those in Comparative Example 4, except that during the preparation, the sintering temperature in the application sintering step was 600°C and the sintering time was 4h to control the crystallinity of LiFePO₄ to be 8%. A positive electrode active material enveloped with amorphous lithium iron pyrophosphate, amorphous lithium iron phosphate, and carbon was obtained.

### Comparative Examples 8 to 11

The conditions were the same as those in Example 1-7, except that during the preparation of lithium iron pyrophosphate (Li₂FeP₂O₇), the drying temperature/drying time in the drying step in Comparative Examples 8 to 10 were respectively 80°C/3h, 80°C/3h, and 80°C/3h, during the preparation of lithium iron pyrophosphate (Li₂FeP₂O₇), the sintering temperature/sintering time in the sintering step in Comparative Examples 8 to 10 were respectively 400°C/3h, 400°C/3h, 350°C/2h, and during the preparation of lithium iron phosphate (LiFePO₄), the drying temperature/drying time in the drying step in Comparative Example 11 were 80°C/3h, and the amounts of Li₂FeP₂O₇/LiFePO₄ used in Comparative Examples 8 to 11 were respectively 47.2 g/15.7 g, 15.7 g/47.2 g, 62.8 g/0 g, and 0 g/62.8 g.

The [preparation of positive electrode plate], [preparation of negative electrode plate], [preparation of electrolyte], [separator], and [preparation of battery] in the foregoing examples and comparative examples are the same as the process of Example 1-1.

### [Test for related parameters]

### (1) Test for initial gram capacity of button battery:

The prepared button battery was charged to 4.3 V at 0.1C under a voltage of 2.5 V-4.3 V, then charged at constant voltage of 4.3 V to a current less than or equal to 0.05 mA, left standing for 5 min, and then discharged to 2.0 V at 0.1C, and a discharge capacity at that pointwas an initial gram capacity and recorded as D0.

### 2. Test method of ratio of 3C constant current charge

Under a constant temperature environment of 25°C, the new full batteries were left standing for 5 min, and then discharged to 2.5 V at 1/3C. The full batteries were left standing for 5 min, charged to 4.3 V at 1/3C, and then charged at a constant voltage of 4.3 V to a current less than or equal to 0.05 mA. The full batteries were left standing for 5 min. The charge capacity at that pointwas recorded as C0. The full batteries were discharge at 1/3C to 2.5 V, left standing for 5 min, then charged at 3C to 4.3 V, and left standing for 5 min. The charge capacity at that pointwas recorded as C1. The ratio of 3C constant current charge was C1/C0×100%. A higher ratio of 3C constant current charge indicates better rate performance of the battery.

### 3. Test for swelling of full battery at 60°C:

The prepared full batteries in 100% state of charge (SOC) were stored at 60°C. The open circuit voltage (OCV) and alternating current internal resistance (IMP) of the cells were measured before, during, and after the storage to monitor the SOCs and to measure the volumes of the cells. The full batteries were taken out after every 48h of storage and left standing for 1h. Then the open circuit voltage (OCV) and internal resistance (IMP) were measured, and the cell volumes were measured by a drainage method after the cells were cooled to room temperature. In the drainage method, first a scale that automatically performs unit conversion on dial data was used to separately measure a weight of the cell, denoted as F₁, then the cell was completely placed into deionized water (density given to be 1 g/cm³), and the weight of the cell at that pointwas measured as F₂. The buoyant force experienced by the cell, denoted as F_{buoyant}, was calculated as F₁-F₂. Then, according to Archimedes' principle, F_{buoyant}= ρ × g × V_{displaced}, the volume V of the cell could be calculated as V=(F₁-F₂)/(ρ × g).

It can be learned from the OCV and IMP test results that the batteries of all the examples always maintained an SOC of above 99% throughout the storage test.

After 30 days of storage, the cell volumes were measured and the proportion increases in the cell volumes after storage relative to the cell volumes before storage were calculated.

In addition, the remaining capacities of the cells were measured. The full batteries were charged to 4.3 V at 1C under a voltage of 2.5 V to 4.3 V, then charged at constant voltage of 4.3 V to a current less than or equal to 0.05 mA, The full batteries were left standing for 5 min. The charge capacities at that pointwere the remaining capacities of the cells.

### 4. Test for cycling performance of full battery at 45°C

Under a constant temperature of 45°C, the prepared full batteries were charged to 4.3 V at 1C under a voltage of 2.5 V to 4.3 V, and then charged at constant voltage of 4.3 V to a current less than or equal to 0.05 mA. After left standing for 5 min, the full battery was discharged to 2.5 V at 1C. The discharge capacity at that pointwas recorded as D0. The charge and discharge cycle was repeated until the discharge capacity was reduced to 80% of D0. The number of cycles the cell had undergone at that pointwas recorded.

### 5. Test for lattice change rate:

At a constant temperature of 25°C, th positive electrode active material samplese prepared above were placed in an XRD instrument (model: Bruker D8 Discover), and the samples were tested at 1°/min. The test data were organized and analyzed, and the lattice constants a0, b0, c0, and v0 (where a0, b0, and c0 represent the lengths of faces of the unit cell, and v0 is the volume of the unit cell, which can be obtained directly from XRD refinement results) at that pointwere calculated with reference to standard PDF cards.

The positive electrode active material samples were prepared into button batteries using the foregoing preparation method of button battery, and the button batteries were charged at a small rate of 0.05C until the current was reduced to 0.01C. The positive electrode plate was then taken out from the button battery and placed in dimethyl carbonate (DMC) for 8 hours, dried, and scraped for powder, and particles with a particle size less than 500 nm were sifted out from the powder. Samples were taken and subjected to the same way as the fresh samples under test above to calculate their crystal cell volumes v1, and (v0-v1)/v0×100% was taken as their lattice change rates (crystal cell volume change rate) before and after complete lithium deintercalation and intercalation to be listed in the table.

### 6. Test for Li/Mn anti-site defect concentration:

The XRD results tested in "test method of lattice change rate" were compared with the PDF (Powder Diffraction File) card of the standard crystal to obtain the Li/Mn anti-site defect concentration. Specifically, the XRD results tested in the "test method of lattice change rate" were imported into the general structural analysis system (GSAS) software to automatically derive the refinement results, which contain the occupancy of the different atoms, and then the Li/Mn anti-site defect concentration was obtained by reading the refinement results.

### 7. Test for dissolution of transition metal:

Full batteries were cycled at 45°C until the capacity was faded to 80% and then discharged to a cut-off voltage of 2.0 V at 0.1C. The cell was then disassembled, the negative electrode plate was removed, and 30 discs with a unit area (1540.25 mm²) were randomly taken on the negative electrode plate and tested by using Agilent ICP-OES730 for inductively coupled plasma atomic emission spectrometry (ICP). The amounts of Fe (if the Mn site of the positive electrode active material was doped with Fe) and Mn were calculated from the ICP results, so as to calculate the dissolving-out amount of Mn (and Fe doped at the Mn site) after the cycling. The test standard is in accordance with EPA-6010D-2014.

### 8. Test for surface oxygen valence:

5 g of the prepared positive electrode active material sample was taken to prepare into a button battery according to the preparation method of button battery as described above. The button battery was charged at a small rate of 0.05C until the current was reduced to 0.01C. The positive electrode plate was then taken out from the button battery and placed in dimethyl carbonate (DMC) for 8 hours, dried, and scraped for powder, and particles with a particle size less than 500 nm were sifted out from the powder. The thus obtained particles were measured by using electron energy loss spectroscopy (EELS; the model of the instrument used was Talos F200S) to obtain energy loss near edge structures (ELNES) that reflect the density of states and energy level distribution of elements. Based on the density of states and energy level distribution, the number of occupying electrons was calculated by integrating the data of the valence band density of states to deduce the surface oxygen valence after charging.

### 9. Measurement of compacted density:

5 g of the foregoing prepared positive electrode active material powder was taken and put in a special mold for compaction (CARVER mold, model 13 mm, USA), and then the mold was put on the compacted density apparatus. A pressure of 3T was applied, the thickness of the powder under the pressure (the thickness after pressure relief, with the container used for testing having an area of 1540.25 mm²) was read on the device, and the compacted density was calculated by ρ=m/v.

### 10. Test for crystallinity of pyrophosphate and phosphate by Xray diffraction method

5 g of the prepared positive electrode active material powder was taken, and a total scattering intensity was measured by X-ray, where the total scattering intensity was a sum of scattering intensities of substances in the entire space and was only related to the intensity of the primary rays, the chemical structure, a total number of electrons participating in the diffraction, that is, the mass, and not to the order state of the sample. Then, crystalline scattering was separated from non-crystalline scattering in a diffraction pattern, where the crystallinity is a ratio of a scattering intensity of the crystalline part to the total scattering intensity.

### 11. Interplanar spacing and included angle

1 g of each prepared positive electrode active material powder was taken and placed into a 50 mL test tube, 10 mL of alcohol with a mass fraction of 75% was injected into the test tube, and the substances were then fully stirred and dispersed for 30 minutes. Then an appropriate amount of the solution was taken with a clean disposable plastic pipette and added dropwise on a 300 mesh copper grid. At this moment, part of the powder would remain on the copper grid. The copper grid with the sample was transferred to the TEM (Talos F200s G2) sample cavity for testing, and original TEM test images were obtained and saved in an original image format (xx.dm3).

The original image obtained from the TEM test was opened in DigitalMicrograph software, and Fourier transform was performed (done automatically by the software upon clicking) to obtain a diffraction pattern. A distance from the diffraction spot to the center of the diffraction pattern was measured to obtain the interplanar spacing, and the included angle was calculated according to the Bragg equation.

**Table 1 Performance test results of Examples 1-1 to 1-33 and Comparative Examples 1 to 7**

| Example number | Core | First coating layer | Second coating layer | Lattice change rate (%) | Li/Mn anti-site defect concentration (%) | Dissolving-out amounts of Fe and Mn after cycling (ppm) | Surface oxygen valence | Button battery gram capacity at 0.1C (mAh/g) | Ratio of 3C constant current charge (%) | Cell swelling rate after 30 days of storage at 60°C (%) | Number of cycles corresponding to 80% capacity retention rate at 45°C |
|---|---|---|---|---|---|---|---|---|---|---|---|
| Example 1-1 | Li_{0.999}Mn_{0.60}Fe_{0.393} V_{0.004}Co_{0.003}P_{0.999}S_{0.001}O4 | 1% Li₂FeP₂O₇/3% LiFePO₄ | 2% carbon | 2.4 | 0.4 | 7 | -1.98 | 158.7 | 84.6 | 1.7 | 1352 |
| Example 1-2 | Li_{0.999}Mn_{0.60}Fe_{0.40}P_{0.999}S_{0.001}O₄ | 0.8% Li₂FeP₂O₇/2.4% LiFePO₄ | 1% carbon | 6.6 | 1.2 | 58 | -1.97 | 149.3 | 77.8 | 5.9 | 829 |
| Example 1-3 | Li_{0.999}Mn_{0.60}Fe_{0.40}P_{0.999}S_{0.001}O4 | 1% Li₂FeP₂O₇/3% LiFePO₄ | 1% carbon | 6.5 | 1.1 | 44 | -1.97 | 149.2 | 78.4 | 4.6 | 945 |
| Example 1-4 | Li_{0.999}Mn_{0.60}Fe_{0.40}P_{0.999}S_{0.001}O₄ | 1.2% Li₂FeP₂O₇/3.6% LiFePO₄ | 1% carbon | 6.5 | 0.8 | 27 | -1.97 | 147.6 | 79.1 | 4.5 | 992 |
| Example 1-5 | Li_{0.999}Mn_{0.60}Fe_{0.40}P_{0.999}S_{0.001}O4 | 1.4% Li₂FeP₂O₇/4.2% LiFePO₄ | 1% carbon | 6.5 | 0.7 | 14 | -1.98 | 147.3 | 79.2 | 3.2 | 1087 |
| Example 1-6 | Li_{0.999}Mn_{0.60}Fe_{0.40}P_{0.999}S_{0.001}O₄ | 1.6% Li₂FeP₂O₇/4.8% LiFePO₄ | 1% carbon | 6.6 | 0.6 | 11 | -1.98 | 146.5 | 80.4 | 2.1 | 1214 |
| Example 1-7 | Li_{0.999}Mn_{0.60}Fe_{0.40}P_{0.999}S_{0.001}O₄ | 1% Li₂FeP₂O₇/3% LiFePO₄ | 2% carbon | 6.5 | 1.0 | 37 | -1.97 | 148.1 | 78.9 | 4.2 | 991 |
| Example 1-8 | Li_{0.999}Mn_{0.60}Fe_{0.40}P_{0.999}S_{0.001}O₄ | 1% Li₂FeP₂O₇/3% LiFePO₄ | 4% carbon | 6.5 | 1.0 | 34 | -1.97 | 146.7 | 78.6 | 3.8 | 1033 |
| Example 1-9 | Li_{0.999}Mn_{0.60}Fe_{0.40}P_{0.999}S_{0.001}O₄ | 1% Li₂FeP₂O₇/3% LiFePO₄ | 5% carbon | 6.4 | 1.1 | 25 | -1.98 | 144.8 | 79.4 | 3.5 | 1131 |
| Example 1-10 | Li_{0.999}Mn_{0.60}Fe_{0.40}P_{0.999}S_{0.001}O₄ | 1% Li₂FeP₂O₇/3% LiFePO₄ | 6% carbon | 6.4 | 1.1 | 12 | -1.98 | 142.8 | 79.5 | 2.3 | 1240 |
| Example 1-11 | Li_{0.999}Mn_{0.60}Fe_{0.40}P_{0.999}S_{0.001}O₄ | 1.5% Li₂FeP₂O₇/2.5% LiFePO₄ | 2% carbon | 6.5 | 1.1 | 28 | -1.97 | 148.3 | 78.4 | 4.4 | 952 |
| Example 1-12 | Li_{0.999}Mn_{0.60}Fe_{0.40}P_{0.999}S_{0.001}O₄ | 2% Li₂FeP₂O₇/2% LiFePO₄ | 2% carbon | 6.6 | 1.0 | 17 | -1.96 | 148.0 | 79.4 | 5.7 | 926 |
| Example 1-13 | Li_{0.999}Mn_{0.60}Fe_{0.40}P_{0.999}S_{0.001}O₄ | 2.5% Li₂FeP₂O₇/1.5% LiFePO₄ | 2% carbon | 6.7 | 1.2 | 14 | -1.96 | 147.8 | 79.1 | 6.4 | 836 |
| Example 1-14 | Li_{0.999}Mn_{0.60}Fe_{0.40}P_{0.999}S_{0.001}O₄ | 3% Li₂FeP₂O₇/1% LiFePO₄ | 2% carbon | 6.7 | 1.1 | 5 | -1.97 | 147.5 | 80.4 | 7.1 | 789 |
| Example 1-15 | Li_{0.999}Mn_{0.60}Zn_{0.40}P_{0.999}S_{0.001}O₄ | 3% Li₂FeP₂O₇/1% LiFePO₄ | 2% carbon | 7.5 | 2.5 | 13 | -1.97 | 139.2 | 79.5 | 7.7 | 880 |
| Example 1-16 | Li_{0.993}Mn_{0.6}Ni_{0.393}Zn_{0.004}Ti_{0.003}P_{0.999}S_{0.001}O₄ | 1% Li₂FeP₂O₇/3% LiFePO₄ | 2% carbon | 5.4 | 0.8 | 10 | -1.97 | 139.8 | 80.4 | 4 | 995 |
| Example 1-17 | Li_{0.999}Mn_{0.60}Fe_{0.393}V_{0.007}P_{0.999}S_{0.001}O₄ | 1% Li₂FeP₂O₇/3% LiFePO₄ | 2% carbon | 4.2 | 0.6 | 8 | -1.97 | 153.8 | 80.2 | 2.5 | 1266 |
| Example 1-18 | Li_{0.999}Mn_{0.60}Fe_{0.393}V_{0.004}Mg_{0.003}P_{0.999}S_{0.001}O₄ | 1% Li₂FeP₂O₇/3% LiFePO₄ | 2% carbon | 2.6 | 0.5 | 4 | -1.97 | 156.2 | 80.5 | 2.3 | 1268 |
| Example 1-19 | LiMn_{0.60}Fe_{0.393}V_{0.004}Mg_{0.003}P_{0.999}N_{0.001}O₄ | 1% Li₂FeP₂O₇/3% LiFePO₄ | 2% carbon | 2.3 | 0.5 | 5 | -1.98 | 158.1 | 80.5 | 1.6 | 1375 |
| Example 1-20 | Li_{1.001}Mn_{0.60}Fe_{0.393}V_{0.004}Mg_{0.003}P_{0.999}Si_{0.001}O₄ | 1% Li₂FeP₂O₇/3% LiFePO₄ | 2% carbon | 2.4 | 0.7 | 6 | -1.98 | 157.9 | 80.3 | 1.8 | 1390 |
| Example 1-21 | Li_{1.001}Mn_{0.55}Fe_{0.40}V_{0.025}Mg_{0.025}P_{0.999}Si_{0.001}O₄ | 1% Li₂FeP₂O₇/3% LiFePO₄ | 2% carbon | 2.2 | 0.5 | 4 | -1.98 | 158.8 | 80.7 | 1.6 | 1482 |
| Example 1-22 | Li_{1.001}Mn_{0.65}Fe_{0.25}V_{0.05}Mg_{0.05}P_{0.999}Si_{0.001}O₄ | 1% Li₂FeP₂O₇/3% LiFePO₄ | 2% carbon | 2.5 | 0.8 | 6 | -1.98 | 157.9 | 80.5 | 2.5 | 1306 |
| Example 1-23 | Li_{1.004}Mn_{0.7}Fe_{0.3}V_{0.05}Mg_{0.05}P_{0.998}B_{0.002}O₄ | 1% Li₂FeP₂O₇/3% LiFePO₄ | 2% carbon | 2.6 | 0.8 | 6 | -1.98 | 157.6 | 82.4 | 2 | 1296 |
| Example 1-24 | Li_{1.006}Mn_{0.75}Fe_{0.15}V_{0.05}Mg_{0.05}P_{0.997}B_{0.003}O₄ | 1% Li₂FeP₂O₇/3% LiFePO₄ | 2% carbon | 2.6 | 0.8 | 4 | -1.98 | 157.7 | 83.4 | 2 | 1352 |
| Example 1-25 | Li_{1.002}Mn_{0.60}Fe_{0.393}V_{0.004}Mg_{0.003}P_{0.998}Si_{0.002}O₄ | 1% Li₂FeP₂O₇/3% LiFePO₄ | 2% carbon | 2.3 | 0.7 | 5 | -1.98 | 157.8 | 81.8 | 1.9 | 1394 |
| Example 1-26 | Li_{0.997}Mn_{0.80}Fe_{0.194}V_{0.003}Mg_{0.003}P_{0.997}S_{0.003}O₄ | 1% Li₂FeP₂O₇/3% LiFePO₄ | 2% carbon | 2.8 | 0.9 | 6 | -1.98 | 156.2 | 83.7 | 2.5 | 1151 |
| Example 1-27 | Li_{0.996}Mn_{0.60}Fe_{0.393}V_{0.004}Mg_{0.003}P_{0.996}S_{0.004}O₄ | 1% Li₂FeP₂O₇/3% LiFePO₄ | 2% carbon | 2.2 | 0.6 | 6 | -1.98 | 158 | 84.6 | 1.7 | 1415 |
| Example 1-28 | Li_{0.995}Mn_{0.9}Fe_{0.094}V_{0.003}Mg_{0.003}P_{0.995}S_{0.005}O₄ | 1% Li₂FeP₂O₇/3% LiFePO₄ | 2% carbon | 3.2 | 1.1 | 7 | -1.96 | 157.6 | 86.2 | 2.6 | 1112 |
| Example 1-29 | Li_{0.994}Mn_{0.90}Fe_{0.094}V_{0.003}Mg_{0.003}P_{0.994}S_{0.006}O₄ | 1% Li₂FeP₂O₇/3% LiFePO₄ | 2% carbon | 3.0 | 1.2 | 10 | -1.95 | 156.1 | 86.3 | 2.8 | 1060 |
| Example 1-30 | Li_{0.993}Mn_{0.90}Fe_{0.094}V_{0.003}Mg_{0.003}P_{0.993}S_{0.007}O₄ | 1% Li₂FeP₂O₇/3% LiFePO₄ | 2% carbon | 2.8 | 1.4 | 10 | -1.95 | 156.3 | 86.6 | 2.6 | 971 |
| Example 1-31 | Li_{0.992}Mn_{0.90}Fe_{0.094}V_{0.003}Mg_{0.003}P_{0.992}S_{0.008}O₄ | 1% Li₂FeP₂O₇/3% LiFePO₄ | 2% carbon | 2.6 | 1.4 | 11 | -1.94 | 155.7 | 87 | 2.6 | 938 |
| Example 1-32 | Li_{0.991}Mn_{0.90}Fe_{0.094}V_{0.003}Mg_{0.003}P_{0.991}S_{0.009}O₄ | 1% Li₂FeP₂O₇/3% LiFePO₄ | 2% carbon | 2.4 | 1.2 | 12 | -1.94 | 155.3 | 87.4 | 2.4 | 922 |
| Example 1-33 | Li_{0.9}Mn_{0.90}Fe_{0.094}V_{0.003}Mg_{0.003}P_{0.9}S_{0.1}O₄ | 1% Li₂FeP₂O₇/3% LiFePO₄ | 2% carbon | 2.1 | 0.9 | 15 | -1.94 | 155.1 | 87.8 | 2.2 | 902 |
| Comparative Example 1 | LiMnPO₄ | - | 1% carbon | 11.4 | 3.2 | 2038 | -1.55 | 126.5 | 50.4 | 48.2 | 208 |
| Comparative Example 2 | LiMn_{0.60}Fe_{0.40}PO₄ | - | 1% carbon | 8.7 | 2.8 | 1571 | -1.76 | 135.6 | 54.5 | 42.5 | 380 |
| Comparative Example 3 | Li_{0.999}MnP_{0.999}S_{0.001}O₄ | - | 1% carbon | 9.8 | 2.5 | 1870 | -1.66 | 129.7 | 52.8 | 45.2 | 292 |
| Comparative Example 4 | Li_{0.999}Mn_{0.60}Fe_{0.40}P_{0.999}S_{0.001}O₄ | - | 1% carbon | 6.7 | 1.8 | 1261 | -1.83 | 141 | 52.9 | 38 | 441 |
| Comparative Example 5 | Li_{0.999}Mn_{0.60}Fe_{0.40}P_{0.999}S_{0.001}O₄ | 4% amorphous Li₂FeP₂O₇ | 1% carbon | 6.5 | 1.8 | 187 | -1.90 | 140.8 | 58.3 | 12.2 | 542 |
| Comparative Example 6 | Li_{0.999}Mn_{0.60}Fe_{0.40}P_{0.999}S_{0.001}O₄ | 4% amorphous LiFePO₄ | 1% carbon | 6.6 | 1.8 | 292 | -1.91 | 140.1 | 58.5 | 11 | 554 |
| Comparative Example 7 | Li_{0.999}Mn_{0.60}Fe_{0.40}P_{0.999}S_{0.001}O₄ | 1% amorphous Li₂FeP₂O₇ + 3% amorphous LiFePO₄ | 1% carbon | 6.6 | 1.8 | 158 | -1.90 | 140.3 | 60.1 | 8.3 | 705 |
| Note: (1) The crystallinity of Li₂FeP₂O₇ and the crystallinity of LiFePO₄ in Examples 1-1 to 1-33 are all 100%; and (2) in Comparative Example 5 to 7, the crystallinity of Li₂FeP₂O₇ is 5% and the crystallinity of LiFePO₄ is 8%. | | | | | | | | | | | |

It can be learned from Examples 1-1 to 1-33 and Comparative Examples 1 to 4 that the presence of the first coating layer is conducive to reducing the Li/Mn anti-site defect concentration and the dissolving-out amounts of Fe and Mn after cycling in the resulting material, increasing the button battery gram capacity of the battery, and improving the safety performance and cycling performance of the battery. Under the condition that other elements dope at the Mn site and the phosphorus site separately, the lattice change rate, the anti-site defect concentration, and the dissolving-out amounts of Fe and Mn of the resulting material can be significantly reduced, the gram capacity of the battery can be increased, and the safety performance and cycling performance of the battery can be improved.

It can be learned from Examples 1-1 to 1-6 that as the application amount of the first coating layer is increased from 3.2% to 6.4%, in the resulting material, the Li/Mn anti-site defect concentration is gradually decreased, the dissolving-out amounts of Fe and Mn after cycling is gradually decreased, and the safety performance and cycling performance of the battery at 45°C are improved correspondingly, but the button battery gram capacity is slightly decreased. Optionally, the corresponding battery has the best comprehensive performance when the total amount of the first coating layer ranges from 4wt% to 5.6wt%.

It can be learned from Examples 1-3, and 1-7 to 1-10 that as the application amount of the second coating layer is increased from 1% to 6%, in the resulting material, the Li/Mn anti-site defect concentration is gradually decreased, the dissolving-out amounts of Fe and Mn after cycling is gradually decreased, and the safety performance and cycling performance of the battery at 45°C are improved correspondingly, but the button battery gram capacity is slightly decreased. Optionally, the corresponding battery has the best comprehensive performance when the total amount of the second coating layer ranges from 3wt% to 5wt%.

It can be learned from Examples 1-11 to 1-15 and Comparative Examples 5 and 6 that when both Li₂FeP₂O₇ and LiFePO₄ exist in the first coating layer, especially when a weight ratio of Li₂FeP₂O₇ to LiFePO₄ ranges from 1:3 to 3:1, and particularly from 1:3 to 1:1, the improvement of performance of the battery is more significant.

**Table 2 Performance test results of Examples 2-1 to 2-4**

| Example number | First coating layer | Crystallinities of pyrophosphate and phosphate¹ | Lattice change rate (%) | Li/Mn anti-site defect concentration (%) | Dissolving-out amounts of Fe and Mn after cycling (ppm) | Surface oxygen valence | Button battery capacity at 0.1C (mAh/g) | Ratio of 3C constant current charge (%) | Cell swelling rate after 30 days of storage at 60°C (%) | Cycling capacity retention rate at 45°C |
|---|---|---|---|---|---|---|---|---|---|---|
| Example 2-1 | 1% Li₂FeP₂O₇/3% LiFePO₄ | 30% | 6.3 | 1.9 | 135 | -1.88 | 146 | 61.9 | 5.1 | 751 |
| Example 2-2 | 1% Li₂FeP₂O₇/3% LiFePO₄ | 50% | 4.7 | 1.2 | 86 | -1.89 | 149.6 | 63 | 4.0 | 917 |
| Example 2-3 | 1% Li₂FeP₂O₇/3% LiFePO₄ | 70% | 3.5 | 0.8 | 24 | -1.91 | 151.9 | 65.8 | 3.4 | 1081 |
| Example 2-4 | 1% Li₂FeP₂O₇/3% LiFePO₄ | 100% | 2.4 | 0.4 | 5 | -1.98 | 158.5 | 81.3 | 1.5 | 1377 |
| ¹: means that the crystallinity of Li₂FeP₂O₇ and the crystallinity of LiFePO₄ are each 30%, 50%, 70%, and 100%. | | | | | | | | | | |

It can be seen from Table 2 that as the crystallinities of pyrophosphate and the phosphate in the first coating layer gradually increase, accordingly, in the resulting material, the lattice change rate, Li/Mn anti-site defect concentration, and dissolving-out amounts of Fe and Mn are gradually decreased, and in the battery, the button battery capacity is gradually increased and the safety performance and cycling performance are gradually improved.

**Table 3 Performance test results of Examples 3-1 to 3-12**

| Exa mple num ber | Doping element type and doping amount | Temper ature in reactor (°C) | Stirr ing time (mi n) | Latt ice cha nge rate (%) | Li/Mn anti-site defect concent ration (%) | Dissol vingout amoun ts of Fe and Mn after cyclin g (ppm) | Surf ace oxy gen vale nce | Butt on batte ry capa city at 0.1C (mA h/g) | Rati o of 3C cons tant curr cut char ge (%) | Cell swel ling rate after 30 days of stora ge at 60°C (%) | Number of cycles correspo nding to 80% capacity retentio n rate at 45°C |
|---|---|---|---|---|---|---|---|---|---|---|---|
| Exa mple 3-1 | Li_{0.999}Mn_{0.60}Fe_{0.393}V_{0.004}C o_{0.003}P_{0.999}S_{0.001}O₄ | 60 | 120 | 5.6 | 2.4 | 46 | 1.98 | 155. 5 | 82.4 | 5.5 | 1123 |
| Exa mple 3-2 | Li_{0.999}Mn_{0.60}Fe_{0.393}V_{0.004}C o_{0.003}P_{0.999}S_{0.001}O₄ | 70 | 120 | 4.8 | 1.9 | 33 | 1.98 | 156. 2 | 82.8 | 4.6 | 1225 |
| Exa mple 3-3 | Li_{0.999}Mn_{0.60}Fe_{0.393}V_{0.004}C o_{0.003}P_{0.999}S_{0.001}O₄ | 80 | 120 | 3.7 | 1.3 | 25 | 1.98 | 156. 8 | 82.6 | 3.6 | 1298 |
| Exa mple 3-4 | Li_{0.999}Mn_{0.60}Fe_{0.393}V_{0.004}C o_{0.003}P_{0.999}S_{0.001}O₄ | 90 | 120 | 2.9 | 1.1 | 15 | 1.98 | 158. 1 | 82.9 | 2.9 | 1326 |
| Exa mple 3-5 | Li_{0.999}Mn_{0.60}Fe_{0.393}V_{0.004}C o_{0.003}P_{0.999}S_{0.001}O₄ | 100 | 120 | 2.5 | 0.5 | 7 | 1.98 | 158. 9 | 83.6 | 2.3 | 1347 |
| Exa mple 3-6 | Li_{0.999}Mn_{0.60}Fe_{0.393}V_{0.004}C o_{0.003}P_{0.999}S_{0.001}O₄ | 110 | 120 | 2.8 | 1.2 | 15 | 1.98 | 157 | 83 | 3.3 | 1278 |
| Exa mple 3-7 | Li_{0.999}Mn_{0.60}Fe_{0.393}V_{0.004}C o_{0.003}P_{0.999}S_{0.001}O₄ | 120 | 120 | 3.7 | 2.1 | 34 | 1.98 | 155. 2 | 82.7 | 4.7 | 1204 |
| Exa mple 3-8 | Li_{0.999}Mn_{0.60}Fe_{0.393}V_{0.004}C o_{0.003}P_{0.999}S_{0.001}O₄ | 130 | 120 | 4.5 | 3.4 | 43 | 1.98 | 154 | 82.4 | 6.1 | 1008 |
| Exa mple 3-9 | Li_{0.999}Mn_{0.60}Fe_{0.393}V_{0.004}C o_{0.003}P_{0.999}S_{0.001}O₄ | 100 | 60 | 4.9 | 3.1 | 34 | 1.98 | 155. 8 | 82.4 | 4.8 | 1040 |
| Exa mple 3-10 | Li_{0.999}Mn_{0.60}Fe_{0.393}V_{0.004}C o_{0.003}P_{0.999}S_{0.001}O₄ | 100 | 90 | 4.1 | 2.5 | 24 | 1.98 | 156. 8 | 82.6 | 4.1 | 1119 |
| Exa mple 3-11 | Li_{0.999}Mn_{0.60}Fe_{0.393}V_{0.004}C o_{0.003}P_{0.999}S_{0.001}O₄ | 100 | 150 | 3.5 | 1.1 | 13 | 1.98 | 158. 2 | 82.8 | 3 | 1206 |
| Exa mple 3-12 | Li_{0.999}Mn_{0.60}Fe_{0.393}V_{0.004}C o_{0.003}P_{0.999}S_{0.001}O₄ | 100 | 180 | 2.5 | 0.5 | 9 | 1.98 | 158. 4 | 83 | 2.1 | 1318 |
| Note 1: The temperature in the reactor and the stirring time are the parameters used during the preparation of element A dope d manganese oxalate (that is, step (1)). | | | | | | | | | | | |

It can be seen from Table 3 that adjustment of the reaction temperature and reaction time in the reactor during the preparation of manganese oxalate particles can further improve the various performance of the positive electrode material in this application. For example, when the reaction temperature is gradually increased from 60°C to 130°C, the lattice change rate and Li/Mn anti-site defect concentration are decreased first and then increased, and the dissolving-out amount of metal after cycling and the safety performance also correspondingly present a similar pattern, while the button battery capacity and the cycling performance are increased first and then decreased with the increase in temperature. With the reaction temperature controlled to be constant, adjustment of the reaction time can also present a similar pattern.

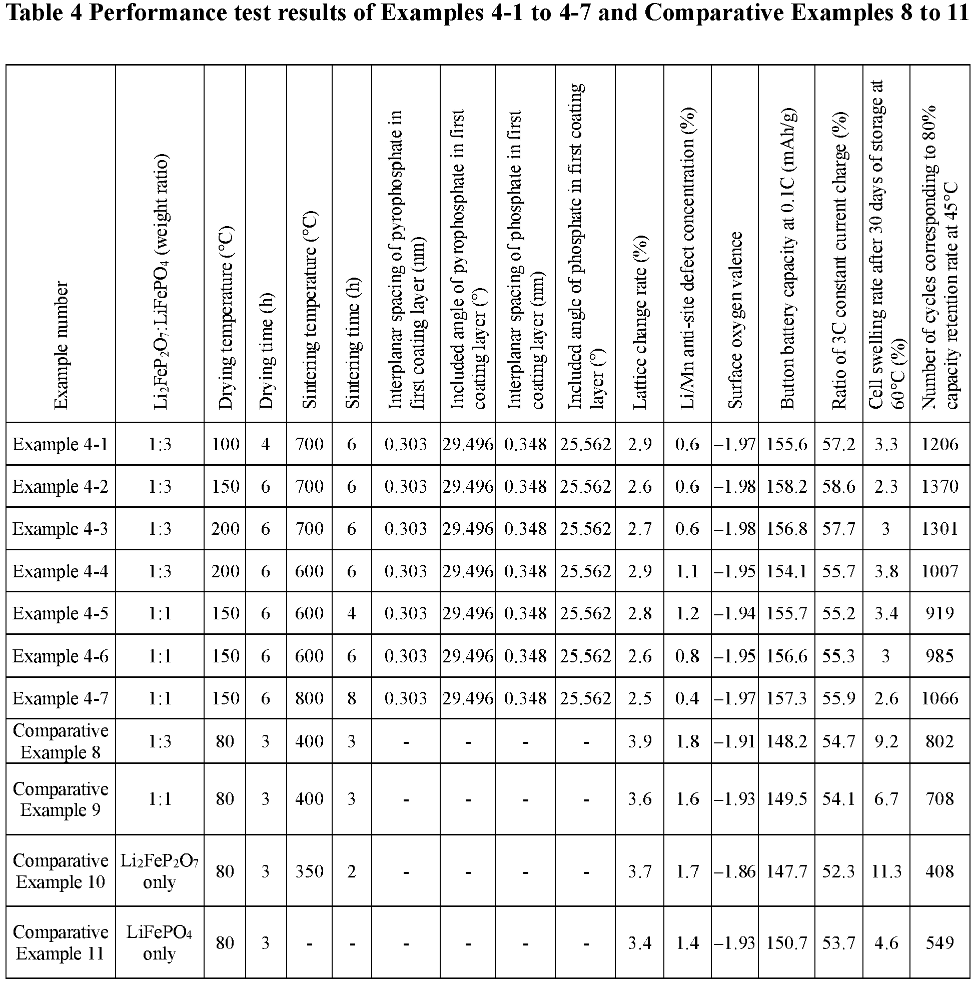

It can be seen from Table 4 that during the preparation of lithium iron pyrophosphate by the method in this application, adjustment of the drying temperature/time and sintering temperature/time during the preparation can improve the performance of the resulting material, thereby improving the battery performance. It can be seen from the Comparative Examples 8 to 11 that during the preparation of lithium iron pyrophosphate, when the drying temperature is below 100°C or the temperature in the sintering step is below 400°C, the Li₂FeP₂O₇ desired to be prepared by this application cannot be obtained, thereby failing to improve the material performance and the performance of the battery containing the resulting material.

The first solvent, second solvent, and first additive in the electrolyte of Example 1-19 were sequentially replaced with the corresponding substances of amounts listed in Table 5 to form the respective batteries of Examples 5 to 33, where the proportion W1% and the proportion W2% were added up to 100% and the proportion of the first additive W3% was measured based on the electrolyte.

**Table 5**

| Examples | First solvent | | First additive | | Mass percentage W2 of second solvent (%) |
|---|---|---|---|---|---|
| | Substance | Proportion W1 (%) | Substance | Proportion W3 (%) | |
| 5 | Same as Example 1-19 | 20 | Same as Example 1-19 | Same as Example 1-19 | 80 |
| 6 | | 80 | | | 20 |
| 7 | | 30 | | | 70 |
| 8 | | 65 | | | 35 |
| 9 | | 15 | | | 85 |
| 10 | | 85 | | | 15 |
| 11 | Solvent 2 | 50 | | | 50 |
| 12 | Solvent 3 | 50 | | | |
| 13 | Solvent 4 | 50 | | | |
| 14 | Solvent 5 | 50 | | | |
| 15 | Solvent 6 | 50 | | | |
| 16 | Same as Example 1-19 | | | 0.01 | 50 |
| 17 | | | | 20 | |
| 18 | | | | 0.1 | |
| 19 | | | | 10 | |
| 20 | | | | 0.5 | |
| 21 | | | | 5 | |
| 22 | | | | 7 | |
| 23 | | | | 15 | |
| 24 | | | | 25 | |
| 25 | | | Additive 9 | Same as Example 1-19 | |
| 26 | | | Additive 2 | | |
| 27 | | | Additive 3 | | |
| 28 | | | Additive 4 | | |
| 29 | | | Additive 5 | | |
| 30 | | | Additive 6 | | |
| 31 | | | Additive 7 | | |
| 32 | | | Additive 8 | | |
| 33 | Solvent 1 | 100 | Additive 1 | 20 | 0 |

The initial gram capacity (mAh/g) of the button battery at 0.1C, ratio of 3C constant current charge (%), number of cycles corresponding to 80% capacity retention rate at 45°C, and cell swelling rate after 30 days of storage at 60°C (%) were tested according to the foregoing test method, and the test results were recorded in Table 6.

**Table 6**

| Example number | Button battery gram capacity at 0.1C (mAh/g) | Ratio of 3C constant current charge (%) | Cell swelling rate after 30 days of storage at 60°C (%) | Number of cycles corresponding to 80% capacity retention rate at 45°C |
|---|---|---|---|---|
| Example 5 | 154.9 | 77.5 | 2.1 | 1286 |
| Example 6 | 155.4 | 81.9 | 5.3 | 1167 |
| Example 7 | 156.9 | 79.5 | 2.7 | 1387 |
| Example 8 | 156.4 | 80.9 | 3.2 | 1267 |
| Example 9 | 154.9 | 77.1 | 2 | 1289 |
| Example 10 | 154.4 | 80.2 | 5.7 | 1087 |
| Example 11 | 154.9 | 79.1 | 4.3 | 1276 |
| Example 12 | 155.4 | 78.7 | 5.1 | 1267 |
| Example 13 | 154.9 | 78.5 | 4.3 | 1276 |
| Example 14 | 155.4 | 78.3 | 5.1 | 1267 |
| Example 15 | 154.9 | 78.5 | 4.3 | 1276 |
| Example 16 | 154.4 | 79.3 | 5.3 | 1167 |
| Example 17 | 154.9 | 78.5 | 4.3 | 1121 |
| Example 18 | 155.4 | 79.5 | 3.1 | 1267 |
| Example 19 | 155.9 | 79.3 | 2.9 | 1297 |
| Example 20 | 155.9 | 80.3 | 2.7 | 1311 |
| Example 21 | 155.9 | 79.9 | 2.5 | 1321 |
| Example 22 | 155.4 | 79.3 | 3.2 | 1286 |
| Example 23 | 154.9 | 79.5 | 4.3 | 1276 |
| Example 24 | 155.4 | 78.6 | 5.1 | 1167 |
| Example 25 | 154.9 | 79.5 | 4.3 | 1046 |
| Example 26 | 155.4 | 79.3 | 5.1 | 1287 |
| Example 27 | 154.9 | 79.5 | 4.3 | 1197 |
| Example 28 | 155.4 | 79.3 | 5.1 | 1214 |
| Example 29 | 154.9 | 79.3 | 4.3 | 1276 |
| Example 30 | 155.4 | 79.3 | 5.1 | 1167 |
| Example 31 | 154.9 | 79.5 | 4.3 | 1076 |
| Example 32 | 155.4 | 79.3 | 5.1 | 1174 |
| Example 33 | 154.4 | 79.8 | 5.1 | 1011 |

In addition, the electrolytes in the full batteries of Examples 1-1 to 1-33, 2-1 to 2-4, 3-1 to 3-12, and 4-1 to 4-4 were replaced with electrolytes obtaining by mixing ethylene carbonate (EC)/ethyl methyl carbonate (EMC) at a volume ratio of 3:7 into uniformity, adding 12.5wt% (based on the weight of the organic solvent) of LiPF₆ to dissolve in the preceding organic solvent, and stirring the mixture evenly; and the electrolytes of the button batteries were replaced with electrolytes obtaining by using a solution obtained by mixing 1 mol/L LiPF₆ in ethylene carbonate (EC) + diethyl carbonate (DEC) + dimethyl carbonate (DMC) at a volume ratio of 1:1:1; and for the full batteries and button batteries in Comparative Examples 1-1 to 1-33, 2-1 to 2-4, 3-1 to 3-12, 4-1 to 4-4, the dissolving-out amounts of Fe and Mn ions after cycling (ppm), button battery gram capacity at 0.1C (mAh/g), ratio of 3C constant current charge (%), number of cycles corresponding to 80% capacity retention rate at 45°C, cell swelling rate after storage at 60°C (%) were tested according to the foregoing method, and the results were recorded in Table 7.

**Table 7**

| Comparative example number | Dissolving-out amounts of Fe and manganese ions after cycling (ppm) | Button battery gram capacity at 0.1C (mAh/g) | Ratio of 3C constant current charge (%) | Cell swelling rate after 30 days of storage at 60°C (%) | Number of cycles corresponding to 80% capacity retention rate at 45°C |
|---|---|---|---|---|---|
| 1-1 | 8 | 158.2 | 83.8 | 1.9 | 1328 |
| 1-2 | 63 | 148.9 | 76.8 | 6.4 | 804 |
| 1-3 | 48 | 148.5 | 77.7 | 5.3 | 918 |
| 1-4 | 32 | 147.3 | 78.2 | 4.8 | 968 |
| 1-5 | 20 | 146.8 | 78.6 | 3.6 | 1064 |
| 1-6 | 15 | 145.9 | 79.2 | 2.8 | 1189 |
| 1-7 | 42 | 147.5 | 78 | 4.8 | 968 |
| 1-8 | 38 | 146.4 | 77.8 | 4.3 | 1012 |
| 1-9 | 29 | 144.3 | 78.4 | 3.7 | 1108 |
| 1-10 | 18 | 142.1 | 78.9 | 2.8 | 1219 |
| 1-11 | 34 | 147.8 | 78 | 5.2 | 927 |
| 1-12 | 22 | 147.6 | 78.6 | 6.1 | 897 |
| 1-13 | 18 | 147.2 | 78.8 | 6.9 | 816 |
| 1-14 | 9 | 147.0 | 79.6 | 7.5 | 764 |
| 1-15 | 18 | 138.7 | 78.7 | 8.4 | 857 |
| 1-16 | 14 | 139.4 | 79.3 | 4.5 | 974 |
| 1-17 | 13 | 153.2 | 79.4 | 3.2 | 1241 |
| 1-18 | 10 | 155.6 | 79.5 | 2.7 | 1245 |
| 1-19 | 9 | 157.6 | 79.6 | 2.1 | 1349 |
| 1-20 | 11 | 157.4 | 79.5 | 2.4 | 1368 |
| 1-21 | 8 | 158.4 | 80 | 2.0 | 1459 |
| 1-22 | 12 | 156.9 | 79.4 | 2.8 | 1283 |
| 1-23 | 11 | 157.1 | 81.8 | 2.5 | 1268 |
| 1-24 | 10 | 157.4 | 82.9 | 2.6 | 1329 |
| 1-25 | 10 | 157.3 | 81 | 2.4 | 1369 |
| 1-26 | 12 | 156.1 | 82.7 | 2.9 | 1128 |
| 1-27 | 11 | 157.5 | 83.8 | 2.4 | 1394 |
| 1-28 | 13 | 156.8 | 85.2 | 3.2 | 1089 |
| 1-29 | 14 | 156.1 | 85.7 | 3.2 | 1038 |
| 1-30 | 16 | 155.8 | 86 | 3.1 | 948 |
| 1-31 | 17 | 155.4 | 86.2 | 3.0 | 917 |
| 1-32 | 18 | 154.8 | 86.4 | 2.8 | 897 |
| 1-33 | 20 | 154.5 | 86.9 | 2.7 | 879 |
| 2-1 | 147 | 145.2 | 58.6 | 5.6 | 698 |
| 2-2 | 97 | 149.2 | 59.7 | 4.7 | 869 |
| 2-3 | 29 | 151.3 | 60.5 | 3.8 | 1027 |
| 2-4 | 8 | 158.2 | 61.6 | 1.9 | 1328 |
| 3-1 | 49 | 155.2 | 81.3 | 5.6 | 1102 |
| 3-2 | 37 | 155.7 | 81.7 | 4.7 | 1203 |
| 3-3 | 28 | 156.4 | 81.5 | 3.8 | 1275 |
| 3-4 | 17 | 157.8 | 81.8 | 3.1 | 1305 |
| 3-5 | 9 | 158.5 | 82.5 | 2.4 | 1327 |
| 3-6 | 19 | 156.7 | 81.9 | 3.6 | 1257 |
| 3-7 | 38 | 154.8 | 81.6 | 4.8 | 1179 |
| 3-8 | 46 | 153.7 | 81.3 | 6.3 | 986 |
| 3-9 | 38 | 155.4 | 81.3 | 4.9 | 1021 |
| 3-10 | 27 | 156.3 | 81.5 | 4.2 | 1097 |
| 3-11 | 15 | 157.8 | 81.7 | 3.1 | 1184 |
| 3-12 | 11 | 158.1 | 81.9 | 2.4 | 1297 |
| 4-1 | -- | 155.4 | 56.5 | 3.4 | 1183 |
| 4-2 | -- | 157.8 | 57.7 | 2.4 | 1347 |
| 4-3 | -- | 156.5 | 56.8 | 3.1 | 1277 |
| 4-4 | -- | 153.8 | 55 | 3.9 | 984 |
| 4-5 | -- | 155.5 | 54.4 | 3.5 | 895 |
| 4-6 | -- | 156.3 | 54.6 | 3.1 | 963 |
| 4-7 | -- | 156.9 | 54.9 | 2.7 | 1043 |

It can be learned from comparison between Table 7 and Tables 1 to 4 that the compositions of the electrolyte of this application can further improve the rate performance and cycling performance of the secondary battery.

On the basis of the electrolyte of Example 1-19, the second additive is further added. Table 8 shows the types of additives and the proportions of the additives in the electrolyte. The initial gram capacity (mAh/g) of the button battery, ratio of 3C constant current charge (%), number of cycles corresponding to 80% capacity retention rate at 45°C, and cell swelling rate after storage at 60°C (%) were tested according to the foregoing method, and the test results were recorded in Table 8.

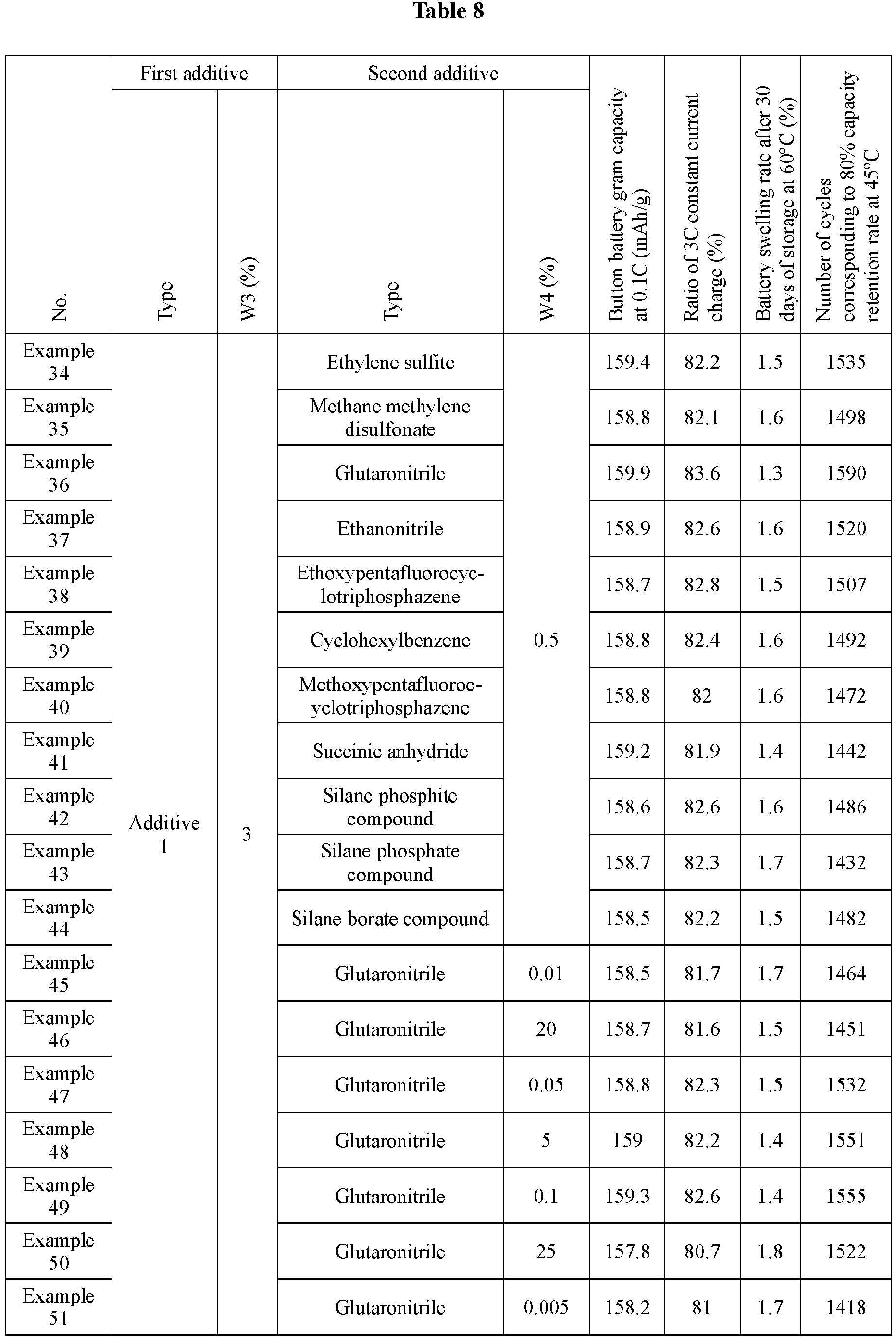

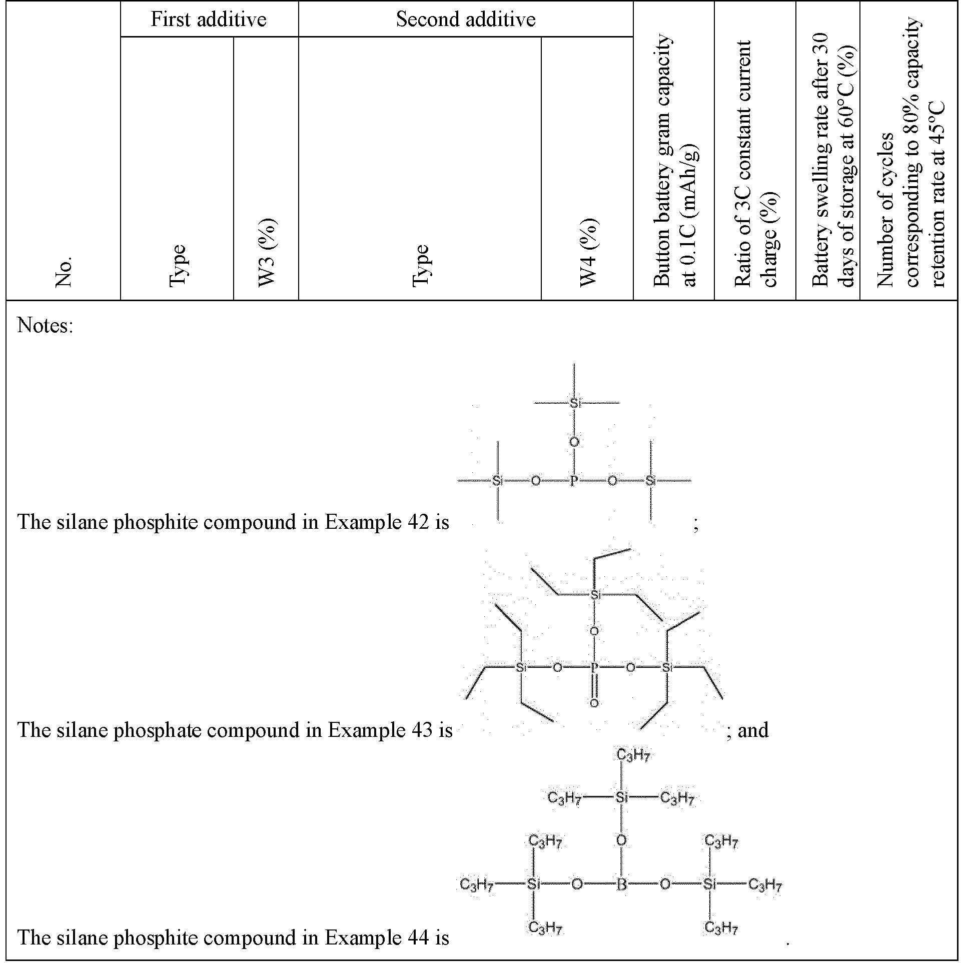

It can be learned from the comparison between the data in Table 8 and the data in Examples 1 to 19 that the use of the second additive can further improve the cycling performance.

Although this application has been described with reference to the optional embodiments, various modifications can be made to this application without departing from the scope of this application and the components therein can be replaced with their equivalents. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A secondary battery, comprising a positive electrode plate and a non-aqueous electrolyte, wherein
the positive electrode plate comprises a positive electrode active material, wherein the positive electrode active material comprises a core and a shell enveloping the core;
the core containing Li₁₊ₓMn_{1-y}A_{y}P_{1-z}R_{z}O₄, wherein x = -0.100 to 0.100, y = 0.001 to 0.500, z = 0.001 to 0.100, A is one or more selected from Zn, Al, Na, K, Mg, Mo, W, Ti, V, Zr, Fe, Ni, Co, Ga, Sn, Sb, Nb, and Ge, and optionally is one or more of Fe, Ti, V, Ni, Co, and Mg, and R is one or more selected from B, Si, N, and S; and
the shell comprising a first coating layer enveloping the core and a second coating layer enveloping the first coating layer, wherein
the first coating layer comprises a pyrophosphate MP₂O₇ and a phosphate XPO₄, wherein M and X each are one or more independently selected from Li, Fe, Ni, Mg, Co, Cu, Zn, Ti, Ag, Zr, Nb, or Al; and
the second coating layer contains carbon; and
the non-aqueous electrolyte comprises an organic solvent, wherein the organic solvent comprises a first solvent, the first solvent comprising one or more of compounds represented by formula 1: 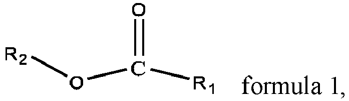
wherein R₁ and R₂ are each independently one of C1 to C10 alkyl group and C1 to C10 haloalkyl group, and optionally R₁ and R₂ are each independently one of methyl, ethyl, propyl, butyl, pentyl, hexyl, fluoromethyl, fluoroethyl, fluoropropyl, fluorobutyl, fluoropentyl, and fluorohexyl, and further optionally R₁ and R₂ are each independently one of methyl, ethyl, propyl, fluoromethyl, fluoroethyl, and fluoropropyl.

2. The secondary battery according to claim 1, wherein the first solvent comprises at least one of the following compounds: 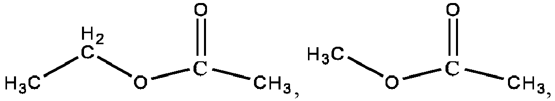 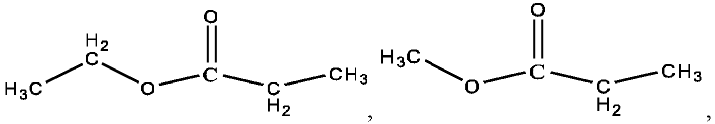 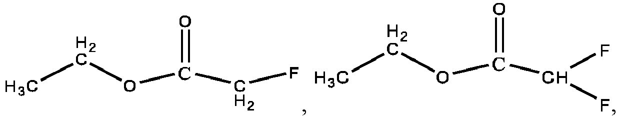 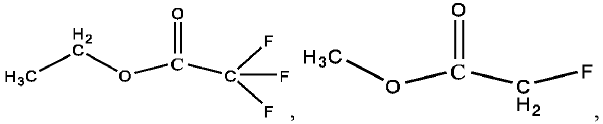 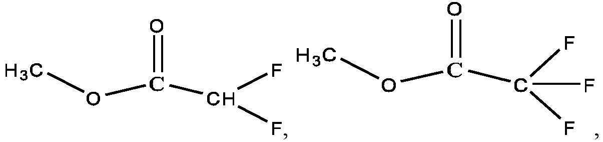 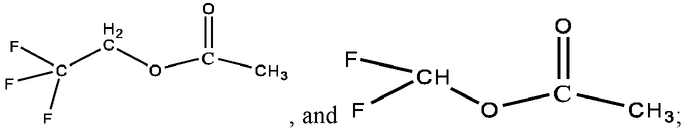 and optionally, the first solvent comprises at least one of the following compounds:

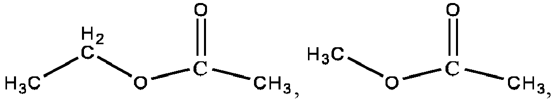

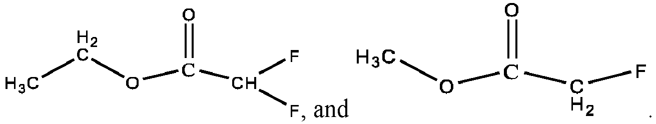

3. The secondary battery according to claim 1 or 2, wherein based on a total mass of the organic solvent, a mass percentage of the first solvent is w1, w1 ranging from 20% to 80%; and optionally w1 ranging from 30% to 65%; and
optionally, the organic solvent further comprises a second solvent, the second solvent comprising one or more from a group consisting of a linear carbonate and a cyclic carbonate; and further optionally, based on the total mass of the organic solvent, a mass percentage of the second solvent is w2, w2 ranging from 20% to 80%; and optionally w2 ranging from 35% to 70%.

4. The secondary battery according to any one of claims 1 to 3, wherein the non-aqueous electrolyte further comprises a first additive, the first additive containing one or more from a group consisting of sultone and cyclic sulfate.

5. The secondary battery according to claim 4, wherein the sultone comprises at least one of compounds represented by formula 2: 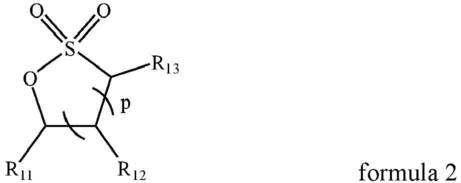
wherein p represents 1, 2, or 3, R₁₁ represents one of a hydrogen atom, halogen atom, C1 to C12 alkyl group, C1 to C12 haloalkyl group, C1 to C12 alkoxy group, and C1 to C12 haloalkoxy group, and optionally R₁₁ represents one of a hydrogen atom, halogen atom, C1 to C6 alkyl group, C1 to C3 haloalkyl group, C1 to C3 alkoxy group, and C1 to C3 haloalkoxy group; and optionally the alkoxy group is linear alkoxy group or cyclic alkoxy group; and optionally the cyclic alkoxy group shares one carbon atom with the parent ring of the sultone, and further optionally the cyclic alkoxy group has 4, 5, or 6 carbon atoms;
each R₁₂ independently represents one of a hydrogen atom, halogen atom, C1 to C12 alkyl group, C1 to C12 haloalkyl group, C1 to C12 alkoxy group, C1 to C12 haloalkoxy group, and 4-to 7-membered sultone group, and optionally each R₁₂ independently represents one of a hydrogen atom, halogen atom, C1 to C3 alkyl group, C1 to C3 haloalkyl group, C1 to C3 alkoxy group, C1 to C3 haloalkoxy group, and 5- to 6-membered sultone group; and optionally the sultone group shares one carbon atom with the parent ring of the sultone, and optionally the sultone group is a 5-membered ring;
R₁₁ and R₁₂ may form a 5- to 10-membered cycloalkyl group with their respective attached carbon atoms;
R₁₃ represents one of a hydrogen atom, halogen atom, carbonyl group, C2 to C6 ester group, C1 to C12 alkyl group, C1 to C12 haloalkyl group, C2 to C12 alkenyl group, C1 to C12 alkoxy group, C1 to C12 haloalkoxy group, and C6 to C20 aryl group or benzyl group, and optionally R₁₃ represents one of a hydrogen atom, halogen atom, carbonyl group, C2 to C3 ester group, C1 to C3 alkyl group, C1 to C3 haloalkyl group, C2 to C6 alkenyl group, C1 to C3 alkoxy group, C1 to C3 haloalkoxy group, and C6 to C10 aryl group or benzyl group;
and/or
the cyclic sulfate comprises at least one of compounds represented by formula 3, 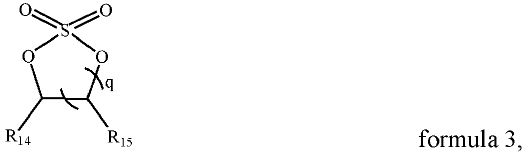
wherein q represents 1, 2, or 3,
R₁₄ represents one of a hydrogen atom, halogen atom, carbonyl group, C1 to C12 alkyl group, C1 to C12 haloalkyl group, C2 to C12 alkenyl group, C1 to C12 alkoxy group, C1 to C12 haloalkoxy group, C2 to C6 ester group, and 4- to 7-membered cyclic sulfate group, and optionally R₁₄ represents one of a hydrogen atom, halogen atom, carbonyl group, double bond, C1 to C6 alkyl group, C1 to C3 haloalkyl group, C1 to C3 alkoxy group, C1 to C3 haloalkoxy group, C2 to C3 easter group, and 4- to 5-membered cyclic sulfate group; and optionally the cyclic sulfate group shares one carbon atom with the cyclic sulfate;
each R₁₅ independently represents one of a hydrogen atom, halogen atom, C1 to C12 alkyl group, C1 to C12 haloalkyl group, C1 to C12 alkoxy group, C1 to C12 haloalkoxy group, and C6 to C20 aryl group, and optionally each R₁₅ independently represents one of a hydrogen atom, halogen atom, C1 to C6 alkyl group, C1 to C3 haloalkyl group, C1 to C3 alkoxy group, C1 to C3 haloalkoxy group, and C6 to C10 aryl group; or
R₁₄ and R₁₅ each form a 4- to 7-membered cyclic sulfate group together with respective carbon atoms bonded thereto, and further optionally R₁₄ and R₁₅ each form a 5-membered cyclic sulfate group together with respective carbon atoms bonded thereto;
optionally, the sultone comprises at least one of the following compounds: 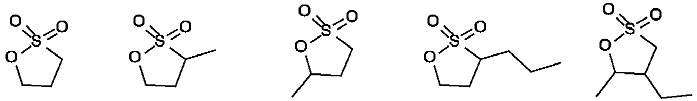 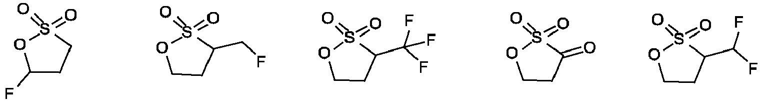 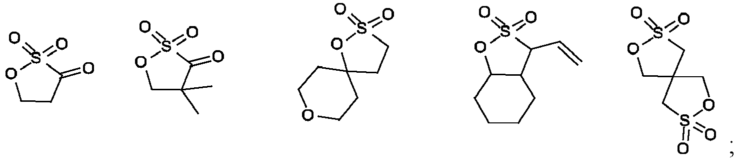
the cyclic sulfate comprises at least one of the following compounds: 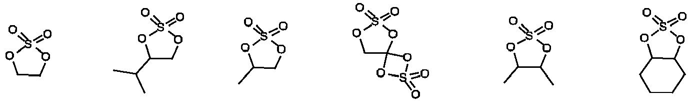 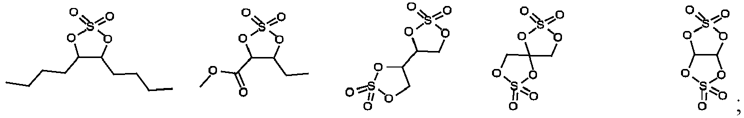 and
further optionally the sultone comprises at least one of the following compounds: 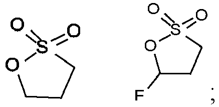 and
the cyclic sulfate comprises at least one of the following compounds:

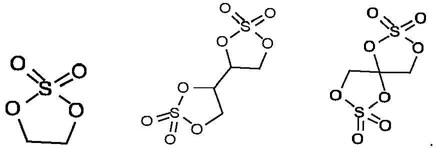

6. The secondary battery according to claim 4 or 5, wherein based on a total mass of the non-aqueous electrolyte, a proportion of the first additive is W3 and 0.01% ≤ W3 ≤ 20%, optionally 0.1% ≤ W3 ≤ 10%, and further optionally 0.5% ≤ W3 ≤ 5%.

7. The secondary battery according to any one of claims 1 to 6, wherein the non-aqueous electrolyte further comprises a second additive, the second additive comprising one or more from a group consisting of a sulfite compound, a disulfonate compound, a nitrile compound, an aromatic compound, a phosphazene compound, a cyclic anhydride compound, a phosphite compound, a phosphate compound, and a borate compound.

8. The secondary battery according to claim 7, wherein based on the total mass of the non-aqueous electrolyte, a proportion of the second additive is W4, and 0.01% ≤ W4 ≤ 20%, optionally 0.05% ≤ W4 ≤ 5%, and further optionally 0.1% ≤ W4 ≤ 3%.

9. The secondary battery according to any one of claims 1 to 8, wherein
based on a weight of the core, an application amount of the first coating layer is C1wt%, C1 being greater than 0 and less than or equal to 7, and optionally ranging from 4 to 5.6; and/or
based on the weight of the core, an application amount of the second coating layer is C2wt%, C2 being greater than 0 and less than or equal to 6, and optionally ranging from 3 to 5.

10. The secondary battery according to any one of claims 1 to 9, wherein
a weight ratio of the pyrophosphate to the phosphate in the first coating layer ranges from 1:3 to 3:1, and optionally from 1:3 to 1:1.

11. The secondary battery according to any one of claims 1 to 10, wherein
the phosphate in the first coating layer has an interplanar spacing of 0.345 nm to 0.358 nm and an included angle of 24.25° to 26.45° in the (111) crystal orientation; and
the pyrophosphate in the first coating layer has an interplanar spacing of 0.293 nm to 0.326 nm and an included angle of 26.41° to 32.57° in the (111) crystal orientation.

12. The secondary battery according to any one of claims 1 to 11, wherein
a ratio of y to 1-y in the core ranges from 1:10 to 10:1, and optionally from 1:4 to 1:1; and/or
a ratio of z to 1-z in the core ranges from 1:9 to 1:999, and optionally from 1:499 to 1:249.

13. The secondary battery according to any one of claims 1 to 12, wherein
a crystallinity of the pyrophosphate and a crystallinity of the phosphate each independently range from 10% to 100%, and optionally from 50% to 100%.

14. The secondary battery according to any one of claims 1 to 13, wherein
A is at least two selected from Fe, Ti, V, Ni, Co, and Mg.

15. The secondary battery according to any one of claims 1 to 14, wherein
a Li/Mn anti-site defect concentration of the positive electrode active material is below 4%, and optionally below 2%.

16. The secondary battery according to any one of claims 1 to 15, wherein
a lattice change rate of the positive electrode active material is below 6%, and optionally below 4%.

17. The secondary battery according to any one of claims 1 to 16, wherein
a surface oxygen valence of the positive electrode active material is below -1.88, and optionally from -1.98 to -1.88.

18. A battery module, comprising a secondary battery, wherein the secondary battery is the secondary battery according to any one of claims 1 to 17.

19. A battery pack, comprising a battery module, wherein the battery module is the battery module according to claim 18.

20. An electric apparatus, comprising a secondary battery, a battery module, or a battery pack, wherein the secondary battery is selected from the secondary battery according to any one of claims 1 to 17, the battery module is the battery module according to claim 18, or the battery pack is the battery pack according to claim 19.
